# EUROPEAN PATENT APPLICATION

(11) **EP 4 699 920 A1**
(43) Date of publication of application: **25.02.2026**
(21) Application number: 24793083.7
(22) Date of filing: 19.04.2024
(51) Int. Cl.: B63B 79/40, B63B 49/00, G05D 1/227, G05D 1/82, G05D 1/698, G06F 21/30, B63B 35/00, G05D 109/30

(54) **CONTROL RIGHT TRANSFER SYSTEM, SHIP MANAGEMENT SYSTEM COMPRISING SAME, AND OPERATING METHOD THEREOF**

(30) Priority: 20.04.2023 KR 20230052245; 03.01.2024 KR 20240001125; 27.03.2024 KR 20240041750; 27.03.2024 KR 20240041776; 03.04.2024 KR 20240045036
(71) Applicant: HD Korea Shipbuilding & Offshore Engineering Co., Ltd., Seongnam-si, Gyeonggi-do 13553 (KR); Hyundai Heavy Industries Co., Ltd., Ulsan 44032 (KR); HD Hyundai Samho Co., Ltd., Jeollanam-do 58462 (KR)
(72) Inventor: PARK, Shin Hyun, Seongnam-si, Gyeonggi-do 13553 (KR); KIM, Sha Ron, Seongnam-si, Gyeonggi-do 13553 (KR); LEE, Sang Hyun, Seongnam-si, Gyeonggi-do 13553 (KR); KIM, Ji Soo, Seongnam-si, Gyeonggi-do 13553 (KR); KANG, Youn Ho, Seongnam-si, Gyeonggi-do 13553 (KR); BAEK, Seung Dae, Seongnam-si, Gyeonggi-do 13553 (KR); CHEONG, Young Soo, Seongnam-si, Gyeonggi-do 13553 (KR)
(74) Representative: Beck Greener LLP
(86) International application number: PCT/KR2024/005367
(87) International publication number: WO 2024/219899

(57) **Abstract**

A control right transfer system according to one embodiment disclosed in the present document comprises: a ship control unit including an onboard control unit, which is disposed inside a ship and controls sailing of the ship, a remote control unit, which is disposed outside of the ship and controls sailing of the ship, and an autonomous operation control unit, which controls autonomous sailing of the ship; an operating condition determination unit for determining operating conditions corresponding to each ship control unit on the basis of a control function of the ship control unit, a navigation area of the ship and the location of the ship; and a control right transfer unit for specifying, from among the ship control units, a first control unit, which currently controls the ship, and a second control unit, which is to receive a control right transfer request, and transferring a control right of the ship from the first control unit to the second control unit on the basis of the first control unit, the second control unit and the operating conditions.

## Description

### [Technical Field]

### CROSS-REFERENCE TO RELATED APPLICATION

This application claims the benefit of priority to Korean Patent Application No. 10-2023-0052245, filed on April 20, 2023, Korean Patent Application No. 10-2024-0001125, filed on January 3, 2024, Korean Patent Application No. 10-2024-0041750, filed on March 27, 2024, Korean Patent Application No. 10-2024-0041776, filed on March 27, 2024, and Korean Patent Application No. 10-2024-0045036, filed on April 3, 2024, the entire contents of which are incorporated herein by reference.

### Technical field

The present disclosure relates to a control right transfer system, a ship management system including the same, and an operating method thereof.

### [Background Art]

An autonomous surface ship refers to a ship that may be operated by a system that controls the ship and minimizes human interference by fusing information and communication sensors, smart technologies, etc. to a conventional ship.

Compared to a conventional ship technology, the autonomous surface ship may improve efficiency and economy, may be environmentally friendly, and may be also safe.

To operate the autonomous surface ship, there is a need for the autonomous surface ship and a land-based control center, such as a remote operation center (ROC) for controlling the autonomous surface ship.

In the meantime, when operating a plurality of autonomous surface ships, because data generated by a plurality of autonomous surface ships are included, the amount of data concentrated on a control server is quite large, and ships often operate far from land. Accordingly, communication may not be smooth, and thus improvements may be needed in data processing.

Moreover, the autonomous surface ship may include a plurality of control devices capable of controlling the corresponding ship. When the control right of the ship is changed, the ship may change from a state where the ship is driven by a control value of a pre-control device, to a state where the ship is driven by a control value of a post-control device. Accordingly, the burden on rapidly controlled equipment may increase, and damage may occur to personnel on board or loaded cargo.

Therefore, a method is needed to alleviate a significant difference between control values of the pre-control device and the post-control device.

### [Disclosure]

### [Technical Problem]

The purpose of the present disclosure is to provide a control right transfer system, a ship management system including the same, and an operating method thereof.

The purpose of the present disclosure is to provide a control right transfer synchronization system that performs synchronization of control values generated by a ship's control right transfer request, a method thereof.

The purpose of the present disclosure is to provide a control right transfer synchronization system that may reduce the burden on control equipment capable of being caused by sudden control right changes, and prevent damage to personnel and cargo on board, by controlling a difference between control values due to the transfer of the control right of a ship within a certain error range, a method thereof.

The purpose of the present disclosure is to provide a control right transfer synchronization system that may linearly control changes in control values by controlling the changes in control values according to the transfer of control right of a ship in a soft landing method, to stably control the operation of control equipment, a method thereof.

The technical problems to be solved by embodiments of the present disclosure are not limited to the aforementioned problems, and other technical problems that are not mentioned will be clearly understood by those skilled in the art from the following description.

### [Technical Solution]

According to an embodiment of the present disclosure, an autonomous surface device includes data storage that stores at least one of data associated with one or more facilities within a ship, data generated by the navigation of the ship, or data received from the outside of the ship, and an integrated management device in which a ship management information generation device that generates information for monitoring the ship based on data stored in the data storage, and an autonomous navigation controller that controls the autonomous navigation of the ship based on the data stored in the data storage and a signal received from the ship management information generation device are integrated.

According to an embodiment, the data storage may standardize data transmitted and received within the device and data received from outside the device by processing or converting at least one of data received from the outside of the device or data transmitted and received within the device.

According to an embodiment, the integrated management device may generate an integrated management interface and may transmit the integrated management interface to be displayed on a display. The integrated management interface may include a ship management information interface that identifies information associated with the ship and controls facilities within the ship, and an autonomous surface control interface that identifies a control right of the ship, a safety level of the ship, a set navigation route, and map data.

According to an embodiment, the autonomous navigation controller may provide a user with an alarm associated with a control right transfer request of the ship by using the autonomous surface control interface.

According to an embodiment, the device may receive weather data and map data from the outside of the device. The receiving of the weather data and the map data may include receiving and storing the weather data and the map data from the outside of the device through the data storage, transmitting the weather data and the map data to the integrated management device, and updating the integrated management interface based on the weather data and the map data through the integrated management device.

According to an embodiment, the device may control navigation based on environmental regulations. The controlling of the navigation based on the environmental regulations may include providing an alarm through the integrated management interface in response to a request for reducing the ship's speed or changing the ship's propulsion mode received from a control server.

According to an embodiment, the autonomous navigation controller may change the operating state of a facility included in the ship based on the signal received from the ship management information generation device.

According to an embodiment, the autonomous navigation controller may transfer a control right of the ship to a ship administrator or a remote operation center (ROC) in response to a control right transfer request received from a control server.

According to an embodiment of the present disclosure, a control right transfer system includes a ship controller including an onboard controller disposed inside the ship and controlling navigation of the ship, a remote controller disposed outside the ship and controlling the navigation of the ship, and an autonomous controller controlling an autonomous navigation of the ship, an operating condition determination device that determines an operating condition corresponding to the ship controllers based on a control function of the ship controller, a navigation area of the ship, and a location of the ship, and a control right transfer device that specifies a first controller currently controlling the ship and a second controller that is the target of a control right transfer request among the ship controllers, and transfers the control right of the ship from the first controller to the second controller based on the first controller, the second controller, and the operating condition.

According to an embodiment, the remote controller may include a first remote controller that controls the navigation of the ship on land and a second remote controller that controls the navigation of the ship at a different location from a location of the first remote controller. The control right transfer device may assign a priority between the first remote controller and the second remote controller based on the first remote controller, the second remote controller, and the operating condition.

According to an embodiment, the control right transfer device may select a remote controller with a high priority among the first remote controller and the second remote controller as the second controller when receiving a control right transfer request to the remote controller.

According to an embodiment, the control right transfer device may determine the priority between the first remote controller and the second remote controller based on a distance and a communication state between the ship and each of the first remote controller and the second remote controller.

According to an embodiment, the ship controller may control ship equipment included in the ship based on the control signal. The control right transfer device may verify a control right transfer request based on the possibility of a collision between the control signals.

According to an embodiment, the control right transfer device may transmit the verification result to the first controller and the second controller.

According to an embodiment, the operating condition may include at least one of an operating constraint element, an environmental element, an autonomous surface ship equipment element, a communication element, or a user element.

According to an embodiment, the control right transfer device may compare state information of the ship with each element included in the operating condition, may determine a control state of the ship as a normal situation when the state information of the ship satisfies the operating conditions, and may determine the control state of the ship as an abnormal situation when at least one of the state information of the ship does not satisfy the operating condition.

According to an embodiment, when the state information of the ship satisfies the operating condition corresponding to the second controller and an approval signal for a control right transfer is received from the first controller, the control right transfer device may transfer the control right of the ship to the second controller.

According to an embodiment, the control right transfer device may transmit, to at least one of the first controller or the second controller, whether the operating condition is satisfied.

According to an embodiment, the autonomous controller may include a first autonomous controller that controls a first function of the ship and a second autonomous controller that controls a second function of the ship. When receiving a control right transfer request from the first autonomous controller and the second autonomous controller, the control right transfer device may transfer control right of the ship to an autonomous controller selected by the user.

According to an embodiment, the autonomous controller may identify a first time point, which is the transmission time of the control right transfer request of the second controller, and a second time point, which is the reception time of the control right transfer request of the first controller, and may determine whether to transfer the control right, based on the comparison result of the difference between the second time point and the first time point and a setting time.

According to an embodiment of the present disclosure, a control right transfer synchronization system includes a ship controller including a first controller that currently controls navigation of a ship and a second controller being a target of a control right transfer, and a control right synchronization device that calculates a control value difference between a control value of the first controller and a control value of the second controller for the control target, when a control right transfer is requested from the second controller, and adjusts the control value of the first controller such that the control value difference is within the error range during the preset first time.

According to an embodiment, the control right synchronization device may adjust the control value of the first controller such that the control value difference is within the error range during the first time in a predetermined control right transfer time from a time point at which the control right transfer is requested.

According to an embodiment, the control right synchronization device may set the first time based on at least one of a navigation area in which the ship is sailing, a classification of the ship, a classification and a risk level of the control target, or a classification of the second controller.

According to an embodiment, the control right synchronization device may recalculate the control value difference after the control value of the first controller is adjusted during the first time, and may request the second controller to adjust the control value of the second controller such that the control value difference is within the error range, when the control value difference is out of the error range.

According to an embodiment, the control right synchronization device may recalculate the control value difference after the control value of the first controller is adjusted during the first time, and may adjust the control value of the first controller such that the control value difference is within the error range through a soft landing method during a remaining time of the control right transfer time, when the control value difference is out of the error range.

According to an embodiment, the control right synchronization device may determine the soft landing method based on the difference between the error range of the control target and the recalculated control value.

According to an embodiment, the control right synchronization device may set the first time depending on a functional classification, a classification of the second controller, and the operating condition according to the functional classification.

According to an embodiment, the control right synchronization device may determine the error range according to the control target when a control right transfer is requested from the second controller.

According to another embodiment of the present disclosure, a control right transfer synchronization method includes receiving a control right transfer request from a second controller, which is a target of a control right transfer, in a state where a first controller is currently controlling navigation of a ship, calculating a control value difference between a control value of the first controller and a control value of the second controller for a control target depending on the control right transfer request, adjusting the control value of the first controller such that the control value difference is within an error range during a predetermined first time, and transferring a control right of the ship from the first controller to the second controller when a control right transfer time expires.

According to an embodiment, the adjusting of the control value may include adjusting the control value of the first controller such that the control value difference is within the error range during the first time in a predetermined control right transfer time from a time point at which the control right transfer is requested.

Furthermore, according to another embodiment of the present disclosure, the control right transfer synchronization method may include setting the first time based on at least one of a navigation area in which the ship is sailing, a classification of the ship, a classification and a risk level of the control target, or a classification of the second controller, or setting the first time depending on a function classification, the classification of the second controller, and an operating condition according to the function classification.

According to an embodiment, the calculating of the control value difference may include recalculating the control value difference after the control value of the first controller is adjusted during the first time. The adjusting of the control value may include requesting the second controller to adjust the control value of the second controller such that the control value difference is within the error range, when the control value difference is out of the error range.

According to an embodiment, the calculating of the control value difference may include recalculating the control value difference after the control value of the first controller is adjusted during the first time. The adjusting of the control value may include adjusting the control value of the first controller such that the control value difference is within the error range through a soft landing method during a remaining time of the control right transfer time, when the control value difference is out of the error range.

Furthermore, according to another embodiment of the present disclosure, the control right transfer synchronization method may include determining the error range according to the control target when a control right transfer is requested by the second controller.

The features briefly summarized above with respect to the present disclosure are merely aspects of the detailed description of the present disclosure described below, and do not limit the scope of the present disclosure.

### [Advantageous Effects]

According to various embodiments of the present disclosure, communication within a ship, between ships, and between a ship and a control server may be performed smoothly by integrating platforms to transmit and receive data necessary for the operation of an autonomous surface ship. In particular, in a process of transmitting and receiving data, latency may be minimized and data reliability may be improved. Furthermore, duplication of multiple nodes, entities or components may be eliminated by integrating platforms, and a control server and ships within a system for autonomous surface ships may use the same platform, thereby maximizing economy and efficiency. Also, convenient control of a single ship and control of multiple ships may be provided as an integrated management interface is provided by the integrated platform.

According to various embodiments of the present disclosure, the operational efficiency of the ship may be improved by transferring the control right in different ways based on the control situations of the ship and simultaneously the possibility of a ship accident may be reduced. In addition, the security of ship operation may be strengthened by authenticating a control device, and the efficiency of ship control may be improved by transferring the control right in consideration of the priority between ship controllers. Besides, it is possible to prevent conflicts between a plurality of ship controllers and to improve the operational efficiency of a ship at the same time, by verifying a control right transfer request.

According to various embodiments of the present disclosure, control values generated by a control right transfer request of a ship may be synchronized with each other.

According to various embodiments of the present disclosure, it is possible to reduce the burden on control equipment capable of being caused by sudden control right changes, and to prevent damage to personnel and cargo on board, by controlling a difference between control values due to the transfer of the control right of a ship within a certain error range.

According to various embodiments of the present disclosure, it is possible to linearly control changes in control values by controlling the changes in control values according to the transfer of control right of a ship in a soft landing method, to stably control the operation of control equipment.

Effects obtained in the present disclosure are not limited to the above-mentioned effects, and other effects that are not mentioned will be clearly understood by those skilled in the art, to which the present disclosure belongs, from the following description.

### [Description of Drawings]

FIG. 1 is a diagram illustrating a ship management system including a ship and a control server, according to an embodiment.
FIG. 2 is a diagram showing a ship management system including a control server and a ship equipped with an integrated platform, according to an embodiment of the present disclosure.
FIG. 3 is a block diagram schematically illustrating an integrated platform, according to an embodiment of the present disclosure.
FIG. 4 is a block diagram schematically illustrating an integrated management device, according to an embodiment of the present disclosure.
FIG. 5 is a block diagram showing a control right transfer system, according to an embodiment of the present disclosure.
FIG. 6 is a flowchart for describing control right transfer in a normal situation, according to an embodiment of the present disclosure.
FIG. 7 is a flowchart illustrating control right transfer according to approval of a control means, according to an embodiment of the present disclosure.
FIG. 8 is a flowchart for describing control right transfer in an abnormal situation, according to an embodiment of the present disclosure.
FIG. 9 is a flowchart for describing a step for determining whether a remote controller of FIG. 8 satisfies an operating condition.
FIG. 10 is a block diagram for describing each configuration of an integrated platform of a ship and an integrated platform of a control server, according to an embodiment of the present disclosure.
FIG. 11 is a flowchart illustrating an example of an operation between a ship and a control server, according to an embodiment of the present disclosure.
FIG. 12 is a flowchart illustrating a process for calculating an optimal route by a control server, according to an embodiment of the present disclosure.
FIG. 13 is a flowchart illustrating an example of controlling navigation in consideration of environmental regulations, according to an embodiment of the present disclosure.
FIG. 14 is a block diagram of a device equipped with an integrated platform.
FIG. 15 is a block diagram illustrating a configuration of a control right transfer synchronization system, according to an embodiment of the present disclosure.
FIG. 16 is an example diagram illustrating a control right transfer process.
FIG. 17 is a flowchart illustrating an operation of a control right transfer synchronization method, according to another embodiment of the present disclosure.
FIG. 18 shows a block diagram of a computing system for executing a control right transfer synchronization method, according to another embodiment of the present disclosure.

### [Mode for Invention]

The advantages and features of the present disclosure and methods for achieving them will become apparent with reference to the embodiments described in detail together with the accompanying drawings. However, the present disclosure is not limited to the embodiments presented below, but may be implemented in various different forms, and should be understood to include all transformations, equivalents, or substitutes included in the spirit and technical scope of the present disclosure. The embodiments presented below are provided to make the present disclosure of the present disclosure complete and to fully disclose the scope of the present disclosure to those having ordinary skill in the art to which it belongs. In describing the present disclosure, when it is determined that the specific description of the known related art obscures the gist of the present disclosure, the detailed description thereof will be omitted.

The terminology used herein to describe embodiments of the present disclosure is not intended to limit the scope of the present disclosure. The terms of a singular form includes plural forms unless otherwise specified. In this application, it should be understood that the terms "include" or "have", when used herein, specify the presence of stated features, numbers, steps, operations, components, and/or parts, but do not preclude the presence or addition of one or more other features, numbers, steps, operations, components, parts, and/or groups thereof.

Some embodiments of the present disclosure may be represented by functional block configurations and various processing steps. Some or all of these functional blocks may be implemented in the variable number of hardware and/or software configurations that perform specific functions. For example, the functional blocks of the present disclosure may be implemented by one or more microprocessors, or by circuit configurations for predetermined functions. Moreover, for example, the functional blocks of the present disclosure may be implemented in various programming or scripting languages. Functional blocks may be implemented as algorithms running on one or more processors. Furthermore, the present disclosure may employ conventional techniques for electronic environment setting, signal processing, and/or data processing. Terms such as "mechanism," "element," "means," and "composition" may be used broadly and may not be limited to mechanical and physical configurations.

Besides, connecting lines or connecting members between components illustrated in the drawings are only illustrative of functional connections and/or physical or circuit connections. In an actual device, connections between components may be represented by a variety of alternative or additional functional, physical, or circuit connections.

In this specification, a "ship" may mean not only a means of transportation, but also a smart ship that improves the operation, maintenance, or safety of the ship by using a digital technology. The smart ship may improve the productivity, efficiency, safety, and environmental friendliness of a ship by using various digital technologies, and may support ship operators to perform their work more efficiently. For example, the smart ship may utilize various digital technologies such as Internet of Things, Big Data, Artificial Intelligence, and Autonomous Navigation.

Hereinafter, an embodiment will be described in detail with reference to the attached drawings. However, embodiments may be implemented in many different forms and are not limited to the examples described herein.

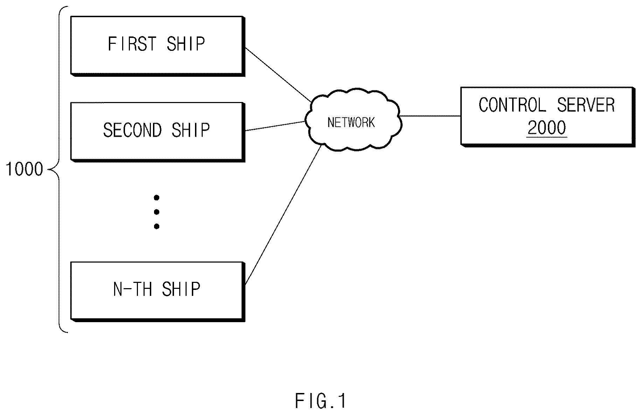

FIG. 1 is a diagram illustrating a ship management system including a ship and a control server, according to an embodiment.

Referring to FIG. 1, a ship management system may include one or more ships 1000 and a control server 2000.

The ships 1000 may communicate with each other over a network and with the control server 2000.

The ships 1000 may also be understood as ship devices respectively mounted on the ships 1000.

In an embodiment, the devices respectively mounted on the ships 1000 may be autonomous devices. The autonomous device may refer to a device that is installed on each of the ships 1000 and is configured to implement an autonomous surface ship.

The devices mounted on each of the ships 1000 may include various sensors (including cameras) for collecting various pieces of information associated with the ship 1000. For example, various pieces of information may include indicator data indicating the status of various facilities mounted on the ship 1000, data associated with the operation of the ship 1000, such as the location, operating speed, and operating direction of the ship 1000, and the like.

Moreover, a device mounted on each of the ships 1000 may include components capable of exchanging data with the outside of the ship 1000. For example, the device mounted on each of the ships 1000 may receive weather data, coastline data, water depth data, etc. from another ship or the control server 2000. For example, the ship 1000 may transmit data collected by a device mounted on the ship 1000 to another ship or the control server 2000.

In detail, the ship 1000 may be a smartphone, a tablet PC, a PC, a smart TV, a mobile phone, a laptop, and other mobile or non-mobile computing devices. The ship 1000 may include any type of device capable of communicating with other devices over a network.

The control server 2000 may also be understood as a control server device mounted on the control server 2000.

The control server 2000 may be implemented as a computer device or a plurality of computer devices that provide commands, codes, files, content, services, etc. by communicating over a network.

In the present disclosure, the control server 2000 may communicate with the one or more ships 1000 to monitor the operation of the one or more ships 1000 and to support the safe operation of the one or more ships 1000. Moreover, the control server 2000 may relay data required by the one or more ships 1000. For example, the one or more ships 1000 may not have good communication conditions during operation. Accordingly, they may have difficulty receiving data on weather, etc. directly from a weather information provider, and the control server 2000 may receive data associated with weather and transmit the data to the one or more ships 1000.

The control server 2000 may be located on the land side, for example, in a remote operations center (ROC). Alternatively, the control server 2000 may be a relay server that mediates between ships at sea and servers on the land side.

The network is a comprehensive data communication network that allows different entities to communicate smoothly with each other, and may include wired Internet, wireless Internet, and mobile wireless communication networks. In an embodiment, the network may be, but is not limited to, a satellite communications network. For example, the network may include a Local Area Network (LAN), a Wide Area Network (WAN), a Value Added Network (VAN), a mobile radio communication network, a satellite communication network, and any combination thereof. Furthermore, the wireless communications may include, but are not limited to, wireless LAN (Wi-Fi), Bluetooth, Bluetooth low energy, ZigBee, Wi-Fi Direct (WFD), ultra wideband (UWB), infrared Data Association (IrDA), Near Field communication (NFC), etc.

In the meantime, in ships and systems of a conventional ship management system, data required for operation are implemented to be transmitted and received, and the processing and regeneration of the transmitted and received data are performed independently within each device.

However, in the conventional method, as each device adopts its own specifications and methods, each device undergoes a difficult modernization process with respect to data according to new specifications or standards, as well as newly processes and converts data each time.

In addition, when environments (e.g., software, interfaces, and the like) for using the equipped device are different from each other for each ship or control server, a user of a device (e.g., the administrator of a ship or the administrator of the control server) needs to master the device each time.

Accordingly, the present disclosure proposes a method of using the same integrated platform 100 for one or more ships to be controlled and a control server controlling one or more ships.

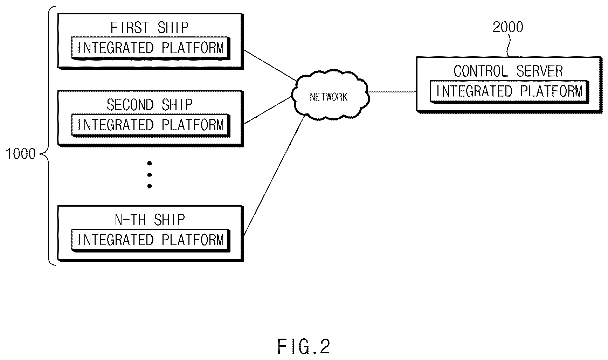

FIG. 2 is a diagram showing a ship management system including a control server and a ship equipped with the integrated platform 100, according to an embodiment of the present disclosure.

Referring to FIG. 2, as with FIG. 1, a ship management system may include the one or more ships 1000 and the control server 2000. The ship management system of FIG. 1 has a difference indicating that the one or more ships 1000 and the control server 2000 included in the ship management system of FIG. 2 are equipped with an integrated platform.

The ship management system according to an embodiment of the present disclosure includes the ship 1000 equipped with the integrated platform 100 to overcome the above-mentioned issues. Moreover, the integrated platform 100, which has the same structure as the integrated platform 100 equipped on the ship 1000, may be equipped on the control server 2000, and thus the control server 2000 may efficiently control the ship 1000 by using the same type and standard of data.

Hereinafter, the integrated platform 100 according to an embodiment of the present disclosure will be described in detail.

Hereinafter, the ship device may mean a device equipped on a ship side to control the ship, and the control server device may mean a device equipped on a control server side to control the control server. Also, operations described as being performed by a ship may be understood as being performed by the ship device, and operations described as being performed by the control server may be understood as being performed by a control server device.

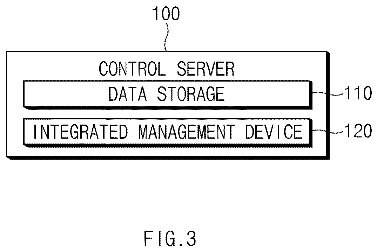

FIG. 3 is a block diagram schematically illustrating the integrated platform 100, according to an embodiment of the present disclosure.

In an embodiment, the integrated platform 100 may include data storage 110 and an integrated management device 120. The integrated platform 100 may be created by integrating the data storage 110 and the integrated management device 120.

The data storage 110 according to an embodiment of the present disclosure may be a platform that oversees the flow of various data that may exist in the system of the present disclosure. The integrated management device 120 according to an embodiment of the present disclosure may regenerate information based on data and may provide the regenerated data to a manager, and may provide convenience for the smooth operation of the system of the present disclosure.

In the present disclosure, the data storage 110 may collect or receive data.

For example, when the data storage 110 is equipped on the ship, the data storage 110 may receive and store data associated with one or more facilities on a ship, data generated through the operation of the ship, or the like. For example, data collected and generated by various sensors mounted on a ship may be transmitted to the data storage 110. Moreover, the data storage 110 may receive and store data from the outside of the ship, such as another ship or a control server. Accordingly, in an embodiment, the data storage 110 may include a communication module.

For example, when the data storage 110 is equipped in the control server, the data storage 110 may receive and store data transmitted from one or more ships to be controlled. In an embodiment, the data storage 110 may match received data with identification data of the ship and store the matched result in a database. Furthermore, the data storage 110 may receive data from the outside of a ship management system. For example, the data storage 110 may receive weather data from a weather information provider (e.g., Korea Meteorological Administration (KMA)). In addition, data transmission from the control server to the ship may be performed by the data storage 110.

In the present disclosure, the data storage 110 may process or convert the collected data.

The data storage 110 of the present disclosure may standardize data exchanged with a node (e.g., another ship or a control server) using the integrated platform 100, data exchanged between components within the integrated platform 100, or data exchanged with various facilities within the ship, by processing or converting data received from the outside. In this way, latency may be minimized, data reliability may be improved, and the foundation for platform integration may be laid. Besides, various protocols may be used for data transmission and reception, and data may be standardized to comply with various regulations. Accordingly, data transmitted and received between a control server or a ship equipped with the integrated platform 100 of the present disclosure may not need to undergo a separate data processing or conversion process.

In the present disclosure, the data storage 110 may transmit data to the outside of the ship, another module, or the integrated management device 120. In an embodiment, the data storage 110 may transmit data to the outside through a communication module included in the data storage 110.

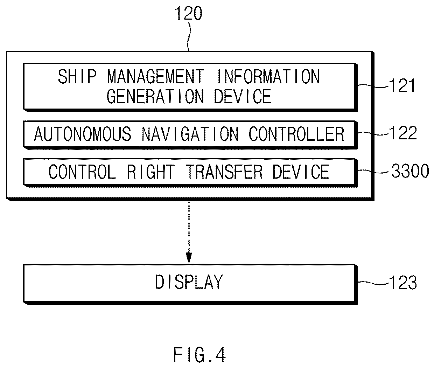

In the present disclosure, the integrated management device 120 may generate information for monitoring the ship and control the autonomous surface of the ship. The integrated management device 120 of the present disclosure will be described in detail with reference to FIG. 4.

In an embodiment, the integrated platform 100 may further include a security module for maintaining the security of the ship and the ship's data.

In an embodiment, the integrated platform 100 may further include a database. In an embodiment, the database may include a database for onboard data, a database for onboard/offboard data, or a database for external data.

FIG. 4 is a block diagram schematically illustrating the integrated management device 120, according to an embodiment of the present disclosure.

In an embodiment, the integrated management device 120 may include a ship management information generation device 121, an autonomous navigation controller 122, and a control right transfer device 3300. The integrated management device 120 of the present disclosure enables the administrator of a ship or the administrator of a control server to comprehensively manage various aspects associated with the ship.

In the present disclosure, the ship management information generation device 121 may generate information for monitoring the ship based on data stored in the data storage 110.

In an embodiment, the ship management information generation device 121 included in the integrated platform 100 equipped on the ship side may collect data associated with one or more facilities within the ship and regenerate the data so as to be used for ship management. Moreover, the ship management information generation device 121 may collect data generated by the ship's operation and may update the ship's operation status in real time. Furthermore, the ship management information generation device 121 may collect data associated with the surrounding environment of the ship and may generate information obtained by analyzing the surrounding environment of the ship. Also, the ship management information generation device 121 may generate a signal based on input from the ship's manager, and the generated signal may be transmitted to the autonomous navigation controller 122, the data storage 110, onboard equipment, other modules, and the like. For example, the generated signal may be a signal for changing the operational state of equipment within the ship.

In an embodiment, the ship management information generation device 121 included in the integrated platform 100 equipped on the control server side may collect data associated with one or more ships to be controlled and may regenerate the data so as to be used to manage the controlled objects. In addition, the ship management information generation device 121 may collect data generated by operations of one or more ships and may update operation statuses of the ships in real time. Furthermore, the ship management information generation device 121 may collect data associated with the surrounding environments of one or more ships and may generate information obtained by analyzing the surrounding environments of the one or more ships. In other words, unlike the case where it is equipped on the ship side, when the integrated platform 100 is equipped on the control server side, the ship management information generation device 121 may be focused on a plurality of ships. Moreover, the ship management information generation device 121 may generate a signal based on the input of the administrator of the control server, and the generated signal may be transmitted to the autonomous navigation controller 122, the data storage 110, other modules, and ships.

In the present disclosure, the autonomous navigation controller 122 may control the autonomous surface of the ship based on data stored in the data storage 110 and signals generated from the ship management information generation device 121. The autonomous navigation controller 122 may collect data stored in the data storage 110 and may update and manage the autonomous surface status in real time.

In detail, when the integrated platform 100 is equipped on the ship side, the autonomous navigation controller 122 may control the autonomous surface of the ship. When the integrated platform 100 is equipped on the control server side, the autonomous navigation controller 122 may comprehensively control the autonomous surface of one or more ships to be controlled.

In the meantime, an autonomous surface technology capable of being applied to autonomous surface ships may be divided according to the degree of automation of ship operation, and may be represented as an example in Table 1.

**[Table 1]**

| Step | Ship status | Operation control |
|---|---|---|
| Degree 1 | Ship receiving automated processes and decision support | Crews on board |
| | | Some functions are automated and controlled by crews |
| Degree 2 | Ship that has crews on board and is remotely controlled | Controlled and operated from other locations |
| | | Crew is on board and waiting for control |
| Degree 3 | Ship that has no crew on board and is remotely controlled | Controlled and operated from other locations |
| | | No crew on board |
| Degree 4 | Fully autonomous surface ship | Operated by integrated management device |

As shown in Table 1, as the autonomous surface level increases from Degree 1 to Degree 4, the degree of human intervention decreases and the degree of automation of operation increases.

The autonomous surface ship system equipped with the integrated platform 100 of the present disclosure may relate to a ship, which has crew members on board and is capable of being remotely controlled, and may be based on an autonomous surface stage corresponding to Degrees 2 to 3. That is, the integrated platform 100 may be based on an autonomous surface stage of Degree 2 or higher.

According to an embodiment, the autonomous navigation controller 122 may transmit a control right transfer request to the control right transfer device 3300. For example, the autonomous navigation controller 122 may determine the autonomous surface status of the ship, may generate a control right transfer request signal based on the determination result, and may transmit the control right transfer request signal to the control right transfer device 3300.

Accordingly, in an autonomous surface ship system equipped with the integrated platform 100 of the present disclosure, the control right for a specific ship may be changed based on specific situations or conditions. For example, there may be situations or conditions indicating that it is appropriate for the ship's administrator (e.g., a crew) to directly control and operate the ship, and there may also be situations or conditions indicating that it is appropriate for the ship to be operated remotely by a control server or to be operated automatically by a processor. Changing the control right for a specific ship is referred to as a "control right transfer", and a process of changing the control right will be referred to as a "control right transfer process" below.

An overall control right transfer process according to an embodiment of the present disclosure is as follows. In an embodiment, a signal for requesting a change in the control right for a specific ship may be automatically generated as the administrator of the control server enters a signal requesting a change in the control right for a specific ship or a specific condition is satisfied. The input or generated signal may be transmitted to the corresponding ship via the integrated platform 100 (specifically, the data storage 110). The integrated platform 100 of the corresponding ship may transmit the received signal to the ship's control right transfer device. In response to receiving a signal for requesting a change in a control right, the ship's control right transfer device may automatically change the control right or may provide an alarm for requesting a change in control right via the ship's autonomous surface control interface. When the alarm is provided, the administrator of the ship (e.g., a crew) may authorize a change in the control right via the ship's autonomous surface control interface. The ship's control right transfer device may change the ship's control right based on an authorization input.

In an embodiment, the control right transfer device 3300 may perform the ship's operational control right transfer process.

In an embodiment, the ship's operational control right may be transferred based on a safety level. The safety level may be an indicator indicating the extent to which a ship is safe. The safety level according to an embodiment may be expressed as in Table 2 below.

**[Table 2]**

| Safety level | Applicable situation |
|---|---|
| Level 1 | General situation |
| Level 2 | Minor fire, minor smoke, crew safety issues, equipment issues, navigational aid device issues, security issues, environmental regulatory issues, etc. |
| Level 3 | Communication failure with control server, general issues with departure/berthing auxiliary devices, security issues, etc. |
| Level 4 | Severe fire, severe smoke, gas exposure, major issues with departure/berthing auxiliary devices, ESD, distress |

As shown in Table 2, as the safety level increases from level 1 to level 4, the risk to the ship may increase.

In a specific embodiment, the safety level may be changed automatically due to detection by the data storage 110 of the ship, or may be changed by a user of the ship. For example, when a fire breaks out in facilities on board the ship, the fire may be detected by the data storage 110 and the safety level may be changed. For example, when a fire breaks out in facilities on board the ship, the ship's users may change the safety level based on information for monitoring the ship, which is generated by the ship management information generation device 121.

The control right transfer device 3300 may perform a ship operation control right transfer process based on data (e.g., the safety level) stored in the data storage 110 or a signal generated from the ship management information generation device 121. Alternatively, the control right transfer device 3300 may generate a ship's operational control right transfer request signal or may provide a ship's operational control right transfer alarm through the autonomous surface control interface described below.

A specific example of the process of transferring the operational control right of a ship is as follows. In an embodiment, in response to a change in the safety level, the autonomous navigation controller may generate a signal for requesting transfer of the operational control right of the ship. The generated signal and the ship's safety level data may be transmitted to the control server via the integrated platform 100 (specifically, the data storage 110). The integrated platform 100 of the control server may store the safety level data of the ship and may transmit a signal for requesting the transfer of the received operational control right to the control right transfer device of the control server. The control right transfer device of the control server may provide a operational control right transfer alarm. The administrator of the control server may approve the transfer of control right based on the alarm of the control right transfer device.

In an embodiment, when the transfer of operational control right is not completed even though the transfer of operational control right is required, the integrated platform 100 of the ship may recall the signal for requesting the transfer of the operational control right or may continuously transmit the signal for requesting the transfer of the operational control right.

In an embodiment, the integrated management device 120 may forcibly transfer the control right. That is, regardless of whether a signal for requesting the transfer of the control right is received, the integrated management device 120 may transfer the control right based on the situation of the ship 1000.

However, even in this case, the integrated management device 120 may transfer the control right depending on the situation of the ship 1000. For example, when the situation of the ship 1000 is an emergency and there is a transfer of the control right of an onboard controller 3130, the integrated management device 120 may immediately transfer the control right of the ship 1000 to the onboard controller 3130. In this way, the integrated management device 120 may ensure that the onboard controller 3130 has the right to control the ship 1000 in the most efficient manner in an emergency situation, but is not limited thereto. For example, the integrated management device 120 may set a situation, in which the control right is to be transferred forcibly despite the control right transfer signal, and a ship controller 3100 being a control right transfer target. When the situation of the ship 1000 satisfies the corresponding situation, the integrated management device 120 may transfer the control right of the ship 1000 to the predetermined ship controller 3100.

As a specific example, when the safety level is level 2, the integrated management device 120 of the ship 1000 may transfer the operational control right to the bridge of the ship 1000 when the control server does not approve the transfer of the operational control right.

As a specific example, when the safety level is level 3, the integrated management device 120 of the ship 1000 may continuously transmit a signal for requesting the transfer of the operational control right when the control server does not approve the transfer of the operational control right.

As a specific example, when the safety level is level 4, the integrated management device 120 of the ship 1000 may control the operation of the ship 1000 to be stopped.

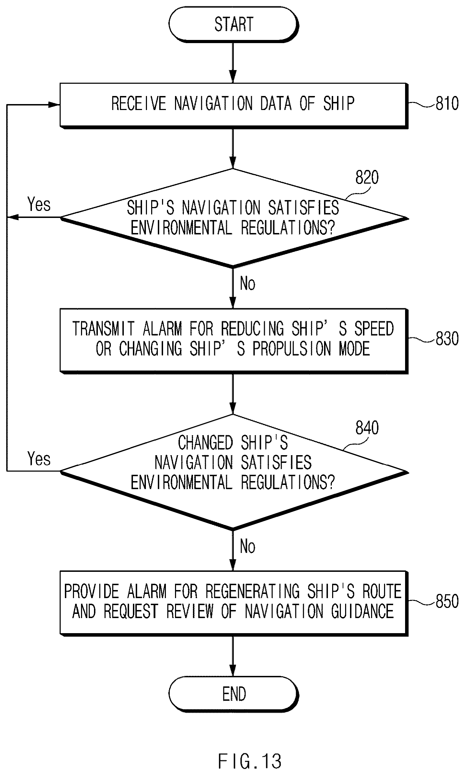

In an embodiment, the autonomous navigation controller 122 may control the operation of the ship 1000 based on environmental regulations. The environmental regulations may mean restrictions on navigation areas or emission substances. The ship 1000 is operated under the premise of complying with environmental regulations, and thus the autonomous navigation controller 122 of the present disclosure may allow the operation of the ship 1000 to comply with the environmental regulations by monitoring the ship 1000. An example of controlling the operation of the ship 1000 based on the environmental regulations is described with reference to FIG. 13.

In an embodiment, the integrated management device 120 may create an integrated management interface. In an embodiment, the integrated management device 120 may transmit the generated integrated management interface to a display 123 such that the generated integrated management interface may be displayed. The integrated management interface may refer to an interface for comprehensively managing the operation of the ship 1000.

In an embodiment, the integrated management interface may include a management information interface of the ship 1000 generated by the ship management information generation device 121 of the ship 1000, and an autonomous surface control interface generated by the autonomous navigation controller 122.

As a specific example, on the side of the ship 1000, the management information interface of the ship 1000 may be configured to allow the administrator of the ship 1000 to identify information associated with the ship 1000, and to comprehensively manage the ship 1000 such as controlling various facilities within the ship 1000. In detail, the management information interface of the ship 1000 may be configured to display information for monitoring and diagnosing facilities and navigation equipment within the ship 1000, environmental regulation information, weather information, and the like. In other words, the management information interface of the ship 1000 may perform a kind of reporting function. Moreover, the management information interface of the ship 1000 may be created to receive a user input. A user may interact with various objects included in the management information interface of the ship 1000 to generate and input signals, and may control various facilities within the ship 1000 based on the input signals. Furthermore, the user may transmit data to the outside of the ship 1000 via the management information interface of the ship 1000.

As a specific example, on the side of the control server, the management information interface of the ship 1000 may be configured to provide information about the one or more ships 1000 to be controlled by the control server.

As a specific example, on the side of the ship 1000, the autonomous surface control interface may be configured to allow the administrator of the ship 1000 to identify information such as a control right, a safety level, a set navigation route, an actual navigation route, map data, and a navigation guide of the ship 1000.

In an embodiment, the transfer of the operational control right of the ship 1000 of the control right transfer device 3300 may be performed based on navigation progress.

In detail, when a normal operation without special risk is possible (e.g., when safety level is level 1), the transfer of the operational control right of ship 1000 may be performed based on the navigation progress indicating the extent to which the ship 1000 has completed its navigation from departure to arrival.

For example, the navigation progress may be determined based on the location of the ship 1000, and the location of the ship 1000 may be based on a distance between the ship 1000 and land (either the port of departure or the port of arrival). For example, the navigation progress may be expressed as "departing", "coast", "ocean", "coast", and "berthing" from departure to arrival.

In an embodiment, when the navigation progress is "departing" or "coast," the operational control right of the ship 1000 may be on the ship 1000. In detail, the operational control right of the ship 1000 may be transferred to the bridge of the ship 1000.

In an embodiment, when the navigation progress is changed into "ocean", the operation of the ship 1000 may be fully autonomous.

In an embodiment, when the navigation progress changes to "coast" or "berthing", the operational control right of the ship 1000 may be transferred back to the bridge of the ship 1000.

As the navigation progress changes, a signal for the transfer of the operational control right may be transmitted and received via the control right transfer device 3300.

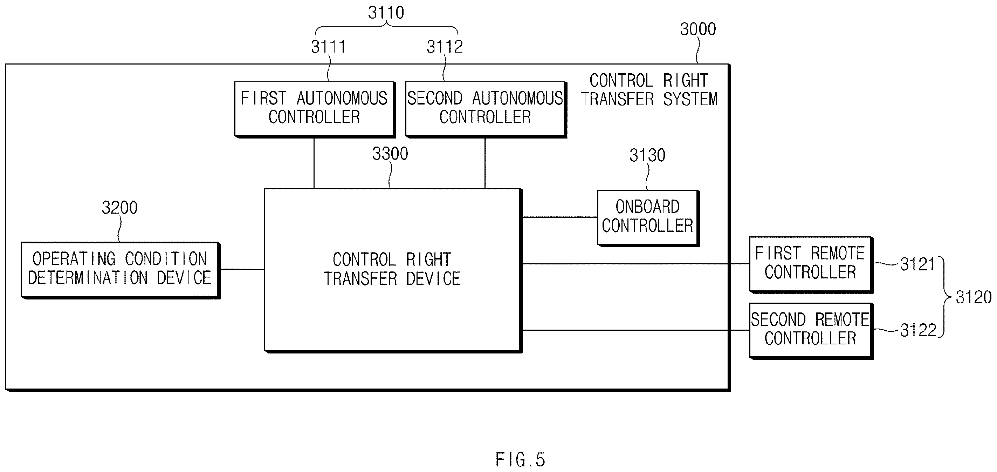

The control right transfer operation of the control right transfer device 3300 will be described in detail later in FIG. 5.

FIG. 5 is a block diagram showing a control right transfer system, according to an embodiment of the present disclosure.

Referring to FIG. 5, a control right transfer system 3000 may include the ship controller 3100, an operating condition determination device 3200 and the control right transfer device 3300. The control right transfer system 3000 may transfer the control right of a ship from the current control means to another control means by using the ship controller 3100, the operating condition determination device 3200 and the control right transfer device 3300.

The ship controller 3100 may include an autonomous controller 3110, a remote controller 3120 and the onboard controller 3130. The ship controller 3100 may control the ship. According to an embodiment, the ship controller 3100 may generate a control signal for controlling pieces of equipment included in the ship, and may control the pieces of equipment included in the ship based on the control signal. For example, the ship controller 3100 may control at least one of the ship's navigation, departure/berthing, or cargo.

The autonomous controller 3110 may control the ship based on autonomous navigation. Here, the autonomous controller 3110 may have substantially the same configuration as the autonomous navigation controller 122 described above in FIG. 4. That is, the autonomous controller 3110 may control the ship without separate control from the user based on data acquired from the ship and predetermined processes, but is not limited thereto.

According to an embodiment, the autonomous controller 3110 may include a first autonomous controller 3111 that controls a first function of the ship, and a second autonomous controller 3112 that controls a second function of the ship. That is, the autonomous controller 3110 may include the plurality of sub-autonomous controllers 3110. Each of the sub-autonomous controllers 3110 may operate separately or simultaneously to control the ship.

For example, the first autonomous controller 3111 may control the ship's rudder, and the second autonomous controller 3112 may control the ship's engine. That is, the first autonomous controller 3111 and the second autonomous controller 3112 may control different pieces of equipment or functions of the ship. Accordingly, the autonomous controller 3110 may control the autonomous navigation of the ship based on the first autonomous controller 3111 and the second autonomous controller 3112.

According to an embodiment, the first autonomous controller 3111 and the second autonomous controller 3112 may control different functions of the ship 1000 while simultaneously controlling at least one identical facility. For example, the first autonomous controller 3111 may control the navigation of the ship 1000; the second autonomous controller 3112 may control the departure/berthing of the ship 1000; and, both the first autonomous controller 3111 and the second autonomous controller 3112 may be the autonomous controller 3110 that controls the engine of the ship 1000.

In this case, when each of the first autonomous controller 3111 and the second autonomous controller 3112 transmits a control right transfer request signal, the control right transfer device 3300 may determine a control right transfer target among the first autonomous controller 3111 and the second autonomous controller 3112. For example, the control right transfer device 3300 may determine a target, to which the control right is transferred, from among the first autonomous controller 3111 and the second autonomous controller 3112 based on at least one of a control right transfer request signal received from the first autonomous controller 3111 and the second autonomous controller 3112, a priority between the first autonomous controller 3111 and the second autonomous controller 3112, or whether the operating condition of the first autonomous controller 3111 and the second autonomous controller 3112 is satisfied.

Moreover, when the first autonomous controller 3111 currently has the control right of the ship 1000 and the second autonomous controller 3112 transmits a control right transfer request signal, the control right transfer device 3300 may determine whether to transfer the control right from the first autonomous controller 3111 to the second autonomous controller 3112, based on at least one of the priority between the first autonomous controller 3111 and the second autonomous controller 3112, or whether the operating conditions of the first autonomous controller 3111 and the second autonomous controller 3112 are satisfied.

The remote controller 3120 may control a ship remotely. According to an embodiment, the remote controller 3120 may be disposed in a ground control center to control the ship based on communication between the ship and the ground control center. For example, the remote control right holder may identify the status of the ship based on the signal received from the ship and may generate a control signal by controlling the remote controller 3120. The remote controller 3120 may transmit the control signal, which generated under the control of the remote control right holder, to the ship by using the remote control center. The ship may operate based on control signals received from the remote control center. Accordingly, the remote controller 3120 may remotely control the ship.

The remote controller 3120 may include a first remote controller 3121 and a second remote controller 3122. According to an embodiment, the first remote controller 3121 and the second remote controller 3122 may be the remote controllers 3120 disposed at different locations. That is, the first remote controller 3121 and the second remote controller 3122 may be the plurality of remote controllers 3120 set in consideration of the ship's navigation route. According to an embodiment, the distance between the ship and the first remote controller 3121 and the distance between the ship and the second remote controller 3122 may vary depending on the navigation of the ship. For example, when the ship departs, the distance between the ship and the first remote controller 3121 may be less than the distance between the ship and the second remote controller 3122. When the ship enters, the distance between the ship and the first remote controller 3121 may be greater than the distance between the ship and the second remote controller 3122. That is, as the location of the remote controller 3120 is fixed, and the location of the ship changes, the distance between the ship and each of the remote controllers 3120 may change.

The onboard controller 3130 may be placed inside the ship to control the ship. For example, the onboard controller 3130 may be located in the wheelhouse or bridge of the ship. The onboard controller 3130 may control the ship under the control of a crew in the ship's wheelhouse.

The operating condition determination device 3200 may determine the operating condition of the ship controller 3100. That is, the operating condition determination device 3200 may determine the operating condition of each of the autonomous controller 3110, the remote controller 3120, and the onboard controller 3130 included in the ship controller 3100. Moreover, the operating condition determination device 3200 may determine the operating condition of each of the first remote controller 3121 and the second remote controller 3122 included in the remote controller 3120.

According to an embodiment, the operating condition determination device 3200 may determine the operating condition of the ship controller 3100 based on the control function of the ship controller 3100, the navigation area of the ship, and the location of the ship.

For example, the operating condition determination device 3200 may select the control target function of the ship controller 3100 among the ship functions such as navigation, departure/berthing, and cargo. Besides, the operating condition determination device 3200 may select a navigation area corresponding to the current location of the ship among navigation areas such as a coast, an ocean, an area near a port, a port, and a narrow waterway. Moreover, the operating condition determination device 3200 may determine the distance between the ship and the ship controller 3100 based on the current location of the ship and the location of the ship controller 3100. Furthermore, the operating condition determination device 3200 may determine the operating condition based on the control function of the selected ship controller 3100, the navigation area of the ship, the location of the ship, and the predetermined condition.

Here, the operating condition may include a plurality of operating condition elements. For example, the operating condition may include at least one of an operating constraint element, an environmental element, an autonomous surface ship equipment element, a communication element, or a user element. That is, the operating condition determination device 3200 may determine each of the operating constraint element, the environmental element, the autonomous surface ship equipment element, the communication element, and the user element based on the control function of the selected ship controller 3100, the ship's navigation area, the ship's location, and the predetermined condition. Accordingly, the operating condition determination device 3200 may determine the operating condition of the ship controller 3100.

The operating condition determination device 3200 is described as determining the operating condition, but is not limited thereto. For example, the operating condition of at least one of each of the ship controllers 3100 or the ship controller 3100 may be determined by the manufacturer of the ship controller 3100, and the operating condition determination device 3200 may also identify the determined operating condition.

The control right transfer device 3300 may transfer the control right of the ship. According to an embodiment, the control right transfer device 3300 may transfer the control right of the ship based on the control situation of the ship. When the current ship's control means satisfies all operating conditions, the control right transfer device 3300 may determine the ship's control situation as a normal situation. Here, the control means may be a controller, which is currently controlling the ship, from among the ship controllers 3100. Moreover, when the control means of the current ship does not satisfy at least one of the operating conditions, the control right transfer device 3300 may determine the ship's control situation as an abnormal situation (safety situation).

First of all, it is described that the control right transfer device 3300 transfers the ship's control right when the ship's control situation is normal.

The control right transfer device 3300 may specify the control means currently controlling the ship. That is, the control right transfer device 3300 may specify a first controller, which currently controls the ship, from among the ship controllers 3100.

The control right transfer device 3300 may identify a control right transfer request. According to an embodiment, the control right transfer device 3300 may receive a control right transfer request from at least one of the ship controllers 3100 and may identify the control right transfer request.

The control right transfer device 3300 may specify the second controller that is the target of the control right transfer request. According to an embodiment, the control right transfer device 3300 may specify the second controller that is the target of the control right transfer request, by specifying the ship controller 3100 corresponding to the control right transfer request.

The control right transfer device 3300 may determine whether the control right transfer request is normal. According to an embodiment, the control right transfer device 3300 may determine whether the control right transfer request is normal, by verifying the control right transfer request. For example, the control right transfer device 3300 may verify the control right transfer request based on the possibility of the collision between control signals, depending on the transfer of a control right. That is, when the possibility of a collision between control signals depending on the transfer of the control right is present, the control right transfer device 3300 may verify that the control right transfer request is abnormal. Also, when there is no possibility of the collision between control signals depending on the transfer of the control right, the control right transfer device 3300 may verify that the control right transfer request is normal.

For the purpose of explanation, it is assumed that the current ship is controlled by the onboard controller 3130 and a navigation system being one of the autonomous controllers 3110, and the onboard controller 3130 requests a departure/berthing system being one of the autonomous controllers 3110 to transfer the control right.

The control right transfer device 3300 may identify a request for transferring the control right to the departure/berthing system of the onboard controller 3130. Accordingly, the control right transfer device 3300 may determine the possibility of the collision between control signals between the navigation system and the departure/berthing system. Both the navigation system and the departure/berthing system may control the ship's rudder by generating control signals associated with the ship's rudder. Accordingly, when the navigation system generates a control signal associated with the rudder while the departure/berthing system simultaneously generates a control signal associated with the rudder, there is a possibility of the collision between control signals. Accordingly, the control right transfer device 3300 may determine that there is a possibility of the collision between control signals due to the control right transfer, and may verify that the transfer request of the onboard controller 3130 is abnormal.

According to an embodiment, the control right transfer device 3300 may determine whether a control right transfer request is normal, based on the format of the control right transfer request. For example, the control right transfer device 3300 may determine whether the control right transfer request is normal, based on whether the data format of the control right transfer request matches a predetermined data format. That is, when the data format of the control right transfer request matches the predetermined data format, the control right transfer device 3300 may determine that the control right transfer request is normal. Also, when the data format of the control right transfer request does not match the predetermined data format, the control right transfer device 3300 may determine that the control right transfer request is abnormal.

The control right transfer device 3300 may determine whether the control means being the target of the control right transfer is the same as the control means that currently holds the control right. That is, the control right transfer device 3300 may determine whether the first control right is the same as the second control right. Accordingly, the control right transfer device 3300 may determine whether the control right transfer is completed. According to an embodiment, when the first control right is the same as the second control right, the control right transfer device 3300 may determine that the control right transfer is completed. Furthermore, when the first control right is not the same as the second control right, the control right transfer device 3300 may determine that the control right transfer is not completed.

According to an embodiment, the control right transfer device 3300 may determine whether confirmation for a control right transfer request is received. That is, the control right transfer device 3300 may determine whether an approval signal of the first control right or a confirmation signal of the second control right is received, in response to a control right transfer request of the second control right.

According to an embodiment, the control right transfer device 3300 may determine whether the confirmation for the control right transfer request is received within a setting time. The control right transfer device 3300 may determine whether the confirmation for the control right transfer request is received within the setting time, by comparing a difference between a transmission time of the approval signal of the first control right or the confirmation signal of the second control right and a reception time of the control right transfer device 3300 with the setting time.

According to an embodiment, the control right transfer device 3300 may transfer the control right. When receiving the confirmation for a control right transfer request within the setting time, the control right transfer device 3300 may transfer the ship's control right from the first control right to the second control right. In this case, the control right transfer device 3300 may transmit control right transfer completion to the first control right and the second control right.

Moreover, when failing to receive the confirmation for the control right transfer request within the setting time, the control right transfer device 3300 may not transfer the control right of the ship. In this case, the control right transfer device 3300 may send a control right transfer rejection to the first control right and the second control right.

According to an embodiment, the control right transfer device 3300 may determine a process of transferring the control right based on a current control means. That is, the control right transfer device 3300 may determine the process of transferring the control right based on whether the first controller is the autonomous controller 3110. Because the autonomous controller 3110 controls the ship based on artificial intelligence, there may not be a separate user controlling the autonomous controller 3110. Accordingly, the autonomous controller 3110 may not identify or may not need to identify the transfer of the control right. Accordingly, the autonomous controller 3110 may not acknowledge the control right transfer request.

On the other hand, in the case of the remote controller 3120 and the onboard controller 3130, there is a separate user controlling the remote controller 3120 and the onboard controller 3130. Therefore, the remote controller 3120 and the onboard controller 3130 may need to acknowledge the control right transfer request.

According to an embodiment, the control right transfer request may be received. The control right transfer device 3300 may determine whether the current control means is the autonomous controller 3110, in response to the control right transfer request. When the current control means is the autonomous controller 3110, the control right transfer device 3300 may transfer the control right. That is, when the current control means is the autonomous controller 3110, the control right transfer device 3300 may transfer the control right without separate confirmation from the autonomous controller 3110.

According to an embodiment, when the current control means is not the autonomous controller 3110, the control right transfer device 3300 may wait for the confirmation of the current control means. When receiving the confirmation of the current control means, the control right transfer device 3300 may identify the reception time of the confirmation of the current control means. The control right transfer device 3300 may compare a difference between the control right transfer request reception time and the confirmation reception time of the current control means with the setting time. In this way, the control right transfer device 3300 may determine whether the confirmation is received within the setting time.

According to an embodiment, when the confirmation is received within the setting time, the control right transfer device 3300 may transfer the control right. That is, when receiving the confirmation within the setting time, the control right transfer device 3300 may transfer the ship's control right from the current control means to a control means corresponding to the control right transfer request. In other words, the control right transfer device 3300 may transfer the ship's control right from the first control right to the second control right.

According to an embodiment, when failing to receive the confirmation within the setting time or receiving the confirmation after the setting time has elapsed, the control right transfer device 3300 may reject the control right transfer.

According to an embodiment, the control right transfer device 3300 may perform authentication of the ship controller 3100. That is, the control right transfer device 3300 may perform authentication of the ship controller 3100 before the control right transfer and may transfer the control right to the ship controller 3100 on which the authentication is completely performed.

According to an embodiment, the control right transfer device 3300 may perform authentication of the ship controller 3100 based on a centralized token management system (CTMS). For example, the control right transfer device 3300 may provide the management screen of the ship controller 3100 to a control right holder. Accordingly, the control right holder may manage the authentication of each of the ship controllers 3100 based on a management screen. In this case, the transfer of the control right may be performed based on the approval of the control right holder. That is, when there is a control right transfer request from the second control right and there is confirmation from the first control right or the second control right, the control right transfer device 3300 may provide control right transfer state information to the control right holder. Accordingly, when the control right holder approves the transfer of control right, the control right transfer device 3300 may transfer the control right of the ship from the first control right holder to the second control right holder.

According to an embodiment, the control right transfer device 3300 may perform authentication of the ship controller 3100 based on a decentralized token management system (BTMS). For example, the control right transfer device 3300 may record a control right transfer record by using a blockchain. That is, the control right transfer device 3300 may control the priority between the ship controllers 3100, and the token may be assigned to the ship controller 3100 that currently has the highest priority. Starting with the first controller, which is the controller with the highest priority, the transfer of the control right of the ship may be recorded in a distributed ledger of a blockchain network. When there is a control right transfer request from the second controller, the control right transfer device 3300 may perform authentication of the second controller through a group authentication process. When authentication is successful, the control right transfer device 3300 may deliver a control token to the second controller. Accordingly, after the first controller, the second controller may be recorded in the distributed ledger of the blockchain network. In this way, the control right transfer device 3300 may perform authentication of the transfer of the control right of the ship.

In case of an abnormal situation (safety situation) of ship control situation, the control right transfer device 3300 may transfer the control right of the ship based on the priority between the ship controllers 3100.

According to an embodiment, the control right transfer device 3300 may set the priority between the ship controllers 3100. For example, the control right transfer device 3300 may set the priority of the ship controllers 3100 in the order of the autonomous controller 3110, the remote controller 3120, and the onboard controller 3130.

According to an embodiment, the control right transfer device 3300 may set a priority between the first autonomous controller 3111 and the second autonomous controller 3112 included in the autonomous controller 3110, but is not limited thereto. For example, the control right transfer device 3300 may set the priority between the first autonomous controller 3111 and the second autonomous controller 3112 equally, and may set the autonomous controller 3110, which is set by a user, from among the first autonomous controller 3111 and the second autonomous controller 3112 so as to have a higher priority.

According to an embodiment, the control right transfer device 3300 may set the priority between the first remote controller 3121 and the second remote controller 3122 included in the remote controller 3120. For example, the control right transfer device 3300 may set the priority between the first remote controller 3121 and the second remote controller 3122 based on the distance between the ship and each of the remote controllers 3120.

For another example, the control right transfer device 3300 may determine the priority between the first remote controller 3121 and the second remote controller 3122 based on the communication state between the ship and each of the remote controllers 3120, but is not limited thereto. For example, the control right transfer device 3300 may determine the priority among the remote controllers 3120 in consideration of additional elements as well as the distance and communication state between the ship and each of the remote controllers 3120.

Hereinafter, it is assumed that the priority of the first remote controller 3121 is higher than the priority of the second remote controller 3122.

According to an embodiment, the control right transfer device 3300 may determine whether the autonomous controller 3110 satisfies an operating condition. When the autonomous controller 3110 satisfies the operating condition, the control right transfer device 3300 may not perform separate control right transfer. In this case, the autonomous controller 3110 may continuously control the ship. When the autonomous controller 3110 does not satisfy the operating condition, the control right transfer device 3300 may transfer the control right of the ship.

According to an embodiment, when the autonomous controller 3110 does not satisfy the operating condition, the control right transfer device 3300 may determine whether the remote controller 3120 satisfies the operating condition. When the remote controller 3120 satisfies the operating condition, the control right transfer device 3300 may transfer control right to the remote controller 3120. When the remote controller 3120 does not satisfy the operating condition, the control right transfer device 3300 may determine the operating condition of the onboard controller 3130.

According to an embodiment, when there are a plurality of remote controllers 3120, the control right transfer device 3300 may determine whether the operating condition of each of the remote controllers 3120 is satisfied. First of all, the control right transfer device 3300 may determine whether the first remote controller 3121 satisfies the operating condition.

When the first remote controller 3121 satisfies the operating condition, the control right transfer device 3300 may transfer control right to the first remote controller 3121. When the first remote controller 3121 does not satisfy the operating condition, the control right transfer device 3300 may determine whether the second remote controller 3122 satisfies the operating condition. When the second remote controller 3122 satisfies the operating condition, the control right transfer device 3300 may transfer the control right to the second remote controller 3122. When the second remote controller 3122 does not satisfy the operating condition, the control right transfer device 3300 may transfer the control right to the onboard controller 3130.

As described above, the remote controller 3120 is described as including the first remote controller 3121 and the second remote controller 3122, but is not limited thereto. For example, when the remote controller 3120 includes three or more remote controllers 3120, the control right transfer device 3300 may set the priority of each of the remote controllers 3120 and may sequentially determine whether the operating condition of each of the remote controllers 3120 is satisfied, based on the priority.

According to an embodiment, the control right transfer device 3300 may determine whether the onboard controller 3130 satisfies the operating condition. When the onboard controller 3130 satisfies the operating condition, the control right transfer device 3300 may transfer the control right to the onboard controller 3130. When the onboard controller 3130 does not satisfy the operating condition, the control right transfer device 3300 may perform a self-pullback system.

According to an embodiment, the control right transfer device 3300 may execute the self-pullback system. Here, when all the ship controllers 3100 do not satisfy the operating condition, the self-pullback system may be a process performed to satisfy the ship's Minimum Risk Condition (MRC).

For example, the self-pullback system may be an operation of stopping the ship. That is, the self-pullback system may be an operation of stopping a ship in operation by adjusting the ship's rudder angle and engine output. In detail, the self-pullback process may be an operation of controlling the ship's rudder angle to 0 within a first setting time, and of controlling the ship's engine output to 0 within a second setting time.

According to an embodiment, the control right transfer device 3300 may perform the self-pullback system based on state information of the ship. That is, the control right transfer device 3300 may adjust the execution time of the self-pullback system in consideration of the location of the ship, the navigation area of the ship, the distance between the ship and adjacent ships, and the like.

For example, when the ship's navigation area is a coastal area, the control right transfer device 3300 may set the execution time of the self-pullback system to be short compared to the case where the ship's navigation area is oceanic. Accordingly, when the ship's navigation area is coastal, the ship may stop fast compared to the case where the ship's navigation area is oceanic.

In particular, when the ship's navigation area is a coastal area, the control right transfer system 3000 may set the execution time of the self-pullback system to 90 seconds. When the ship's navigation area is oceanic, the execution time of the self-pullback system may be set to 120 seconds, but is not limited thereto.

The control right transfer system 3000 may transfer the control right in different ways based on the control situations of the ship, thereby reducing the possibility of a ship accident and improving the operational efficiency of the ship. Besides, the control right transfer system 3000 may enhance the security of ship operation by authenticating a control means.

The control right transfer system 3000 may improve the efficiency of ship control by transferring the control right in consideration of the priority between the ship controllers 3100. The control right transfer system 3000 may prevent conflicts between the plurality of ship controllers 3100 and to improve the operational efficiency of a ship at the same time, by verifying a control right transfer request.

Below, with reference to FIG. 5, the operating method of the control right transfer system 3000 is described. Therefore, the content overlapping an embodiment in FIG. 5 is briefly described.

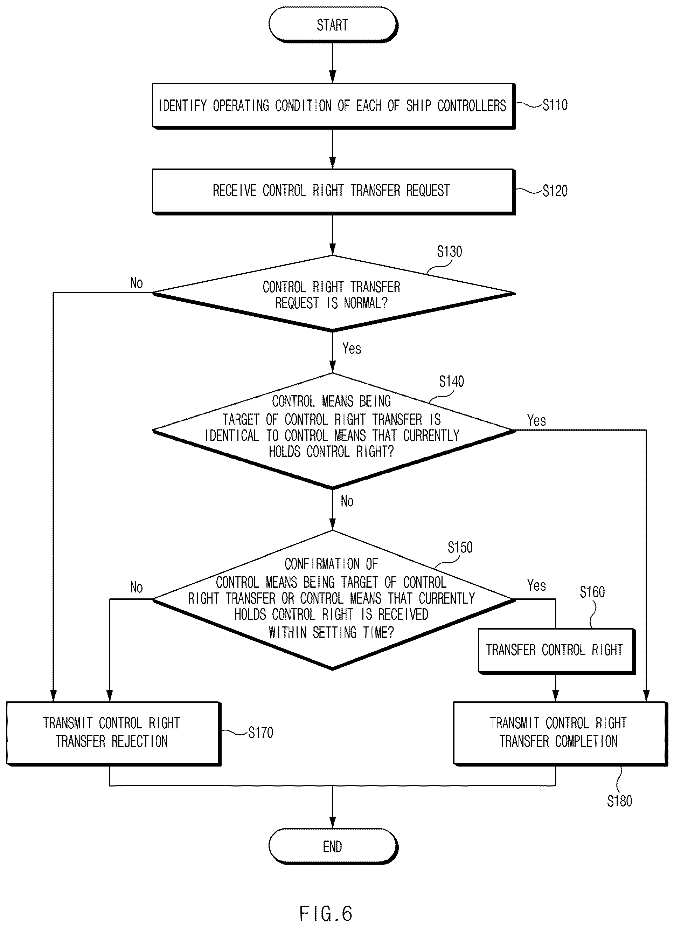

FIG. 6 is a flowchart for describing control right transfer in a normal situation, according to an embodiment of the present disclosure.

Referring to FIG. 6, an operating method of the control right transfer system 3000 may include a step of identifying an operating condition of each of the ship controllers 3100 (S110), a step of receiving a control right transfer request (S120), a step of determining whether the control right transfer request is normal (S130), a step of determining whether a control means being the target of the control right transfer is the same as a control means that currently holds the control right (S140), a step of determining whether confirmation of the control means being the target of the control right transfer or the control means that currently holds the control right is received within a setting time (S150), a step of transferring a control right (S160), a step of transmitting a control right transfer rejection (S170), and a step of transmitting a control right transfer completion (S180).

In S110, the control right transfer system 3000 may identify an operating condition of each of the ship controllers 3100. The control right transfer system 3000 may identify the operating condition of each of the ship controllers 3100 based on the control function of the ship controller 3100, the navigation area of a ship, the location of the ship, and a predetermined condition.

In S120, the control right transfer system 3000 may receive a control right transfer request. The control right transfer system 3000 may receive the control right transfer request from the ship controller 3100, which desires to transfer the control right, from among the ship controllers 3100.

In S130, the control right transfer system 3000 may determine whether the control right transfer request is normal. According to an embodiment, the control right transfer system 3000 may determine whether the control right transfer request is normal, by verifying the control right transfer request. For example, the control right transfer system 3000 may verify the control right transfer request based on the possibility of the collision between control signals, depending on the transfer of a control right. That is, when the possibility of a collision between control signals depending on the transfer of the control right is present, the control right transfer system 3000 may verify that the control right transfer request is abnormal. Also, when there is no possibility of the collision between control signals depending on the transfer of the control right, the control right transfer system 3000 may verify that the control right transfer request is normal.

In S140, the control right transfer system 3000 may determine whether the control means being the target of the control right transfer is the same as the control means that currently holds the control right. That is, the control right transfer system 3000 may determine whether the first control right is the same as the second control right.

In S150, the control right transfer system 3000 may determine whether the confirmation of the control means being the target of the control right transfer or the control means that currently holds the control right is received within the setting time. The control right transfer system 3000 may determine whether the confirmation for the control right transfer request is received within the setting time, by comparing a difference between a transmission time of the approval signal of the first control right or the confirmation signal of the second control right and a reception time of the control right transfer system 3000 with the setting time.

In S160, the control right transfer system 3000 may transfer the control right. When receiving the confirmation for a control right transfer request within the setting time, the control right transfer system 3000 may transfer the ship's control right from the first control right to the second control right.

In S170, the control right transfer system 3000 may transmit a control right transfer rejection. When failing to receive the confirmation for the control right transfer request within the setting time, the control right transfer system 3000 may not transfer the control right of the ship. In this case, the control right transfer system 3000 may send a control right transfer rejection to the first control right and the second control right.

In S180, the control right transfer system 3000 may transmit a control right transfer completion. The control right transfer system 3000 may transmit the control right transfer completion to a control means before the control right transfer and a control means after the control right transfer. That is, the control right transfer system 3000 may send a control right transfer rejection to the first control right and the second control right.

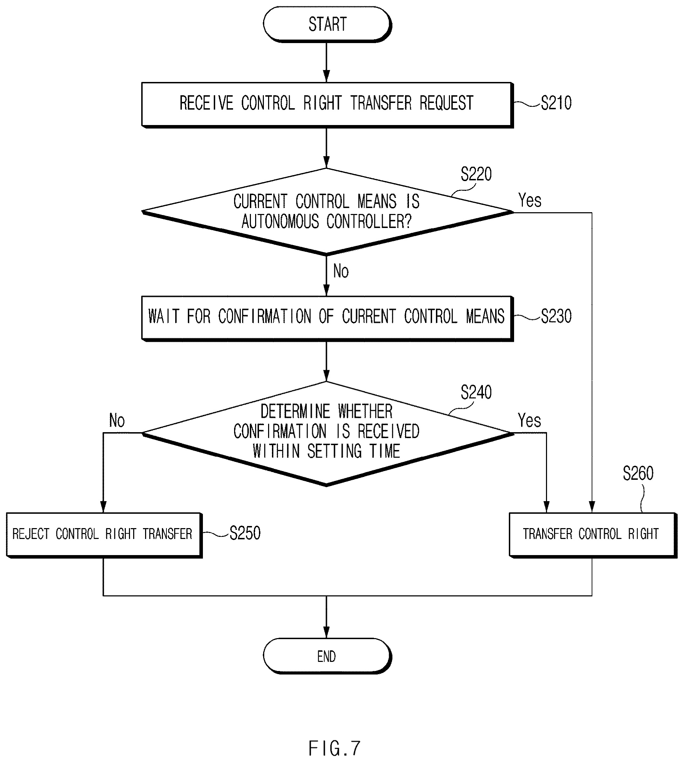

FIG. 7 is a flowchart illustrating control right transfer according to approval of a control means, according to an embodiment of the present disclosure.

Referring to FIG. 7, the operating method of the control right transfer system 3000 may include a step of receiving a control right transfer request (S210), a step of determining whether a current control means is the autonomous controller 3110 (S220), a step of waiting for confirmation of the current control means (S230), a step of determining whether the confirmation is received within a setting time (S240), a step of rejecting a control right transfer (S250), and a step of transferring the control right (S260).

In S210, the control right transfer system 3000 may receive a control right transfer request. The control right transfer system 3000 may receive the control right transfer request from at least one of the ship controllers 3100.

In S220, the control right transfer system 3000 may determine whether a current control means is the autonomous controller 3110.

In S230, the control right transfer system 3000 may wait for the confirmation of the current control means. According to an embodiment, when the current control means is not the autonomous controller 3110, the control right transfer device 3300 may wait for the confirmation of the current control means.

In S240, the control right transfer system 3000 may determine whether the confirmation is received within the setting time. The control right transfer system 3000 may determine whether confirmation is received within a setting time, based on the confirmation reception time of the current control means and the setting time. The control right transfer device 3300 may compare a difference between the control right transfer request reception time and the confirmation reception time of the current control means with the setting time. In this way, the control right transfer device 3300 may determine whether the confirmation is received within the setting time.

In S250, the control right transfer system 3000 may reject the control right transfer. According to an embodiment, the control right transfer system 3000 may send control right transfer rejection to the ship controller 3100 sending the control right transfer request.

In S260, the control right transfer system 3000 may transfer the control right. According to an embodiment, when the confirmation is received within the setting time, the control right transfer device 3300 may transfer the control right. That is, when receiving the confirmation within the setting time, the control right transfer device 3300 may transfer the ship's control right from the current control means to a control means corresponding to the control right transfer request. In other words, the control right transfer device 3300 may transfer the ship's control right from the first control right to the second control right.

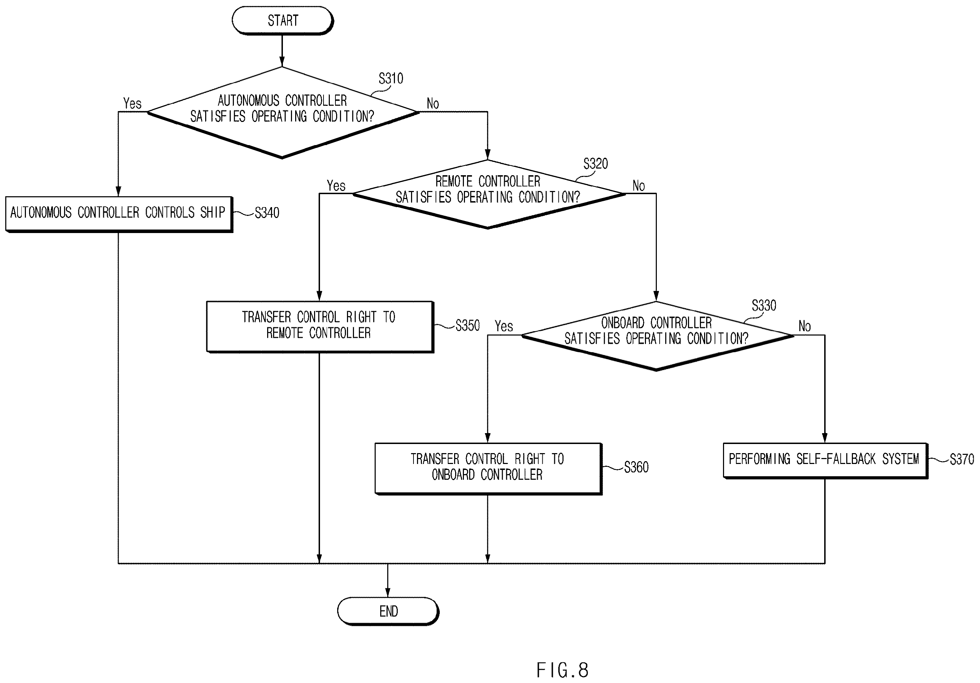

FIG. 8 is a flowchart for describing control right transfer in an abnormal situation, according to an embodiment of the present disclosure.

Referring to FIG. 8, the operating method of the control right transfer system 3000 may include a step of determining whether the autonomous controller 3110 satisfies an operating condition (S310), a step of determining whether the remote controller 3120 satisfies the operating condition (S320), a step of determining whether the onboard controller 3130 satisfies the operating condition (S330), a step of controlling a ship by using the autonomous controller 3110 (S340), a step of transferring the control right to the remote controller 3120 (S350), a step of transferring the control right to the onboard controller 3130 (S360), and a step of performing a self-pullback system (S370).

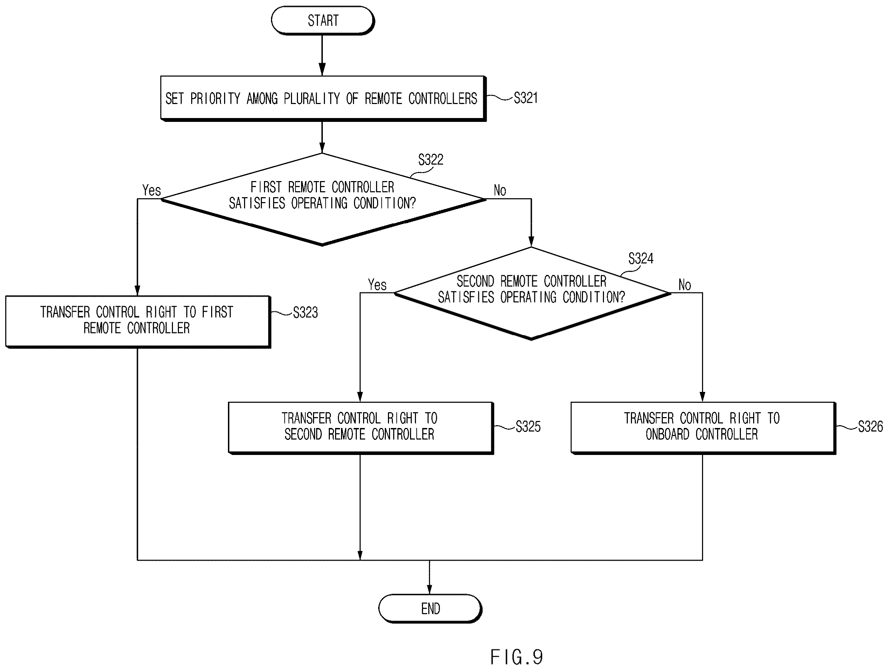

FIG. 9 is a flowchart for describing a step for determining whether the remote controller 3120 of FIG. 8 satisfies an operating condition.

Referring to FIG. 9, the step of determining whether the remote controller 3120 satisfies the operating condition may include a step of setting a priority among the plurality of remote controllers 3120, a step of determining whether the first remote controller 3121 satisfies the operating condition, a step of transferring a control right to the first remote controller 3121, a step of determining whether the second remote controller 3122 satisfies the operating condition, a step of transferring the control right to the second remote controller 3122, and a step of transferring the control right to the onboard controller 3130.

That is, when the remote controller 3120 includes the first remote controller 3121 and the second remote controller 3122, the control right transfer system 3000 may set the priority between the first remote controller 3121 and the second remote controller 3122. Moreover, the control right transfer system 3000 may sequentially determine whether the operating condition is satisfied, based on the priority of the first remote controller 3121 and the second remote controller 3122, and may transfer a control right based on the determination result.

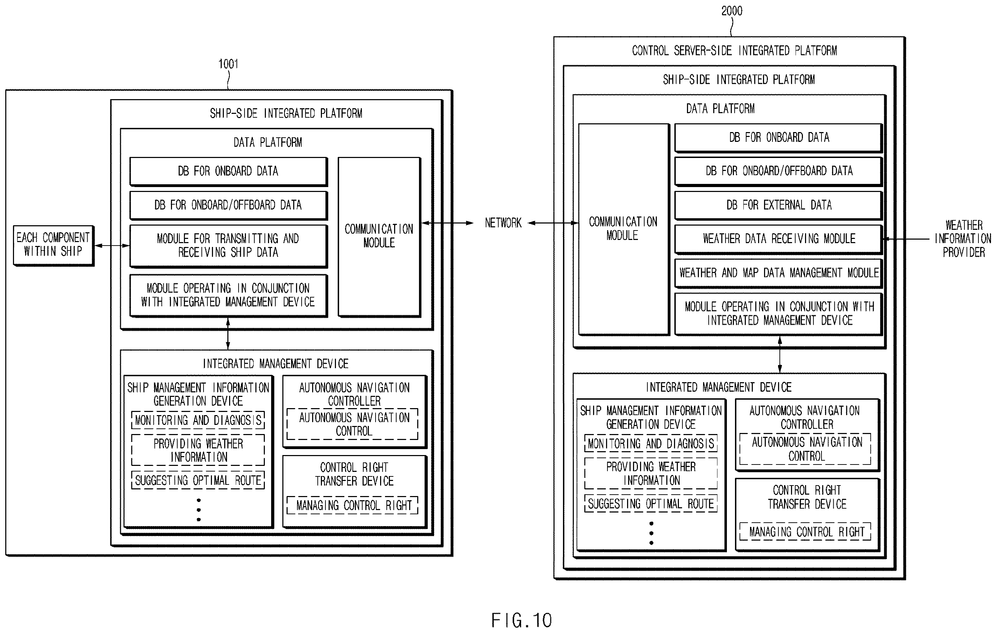

FIG. 10 is a block diagram for describing each configuration of the integrated platform 100 of a ship and the integrated platform 100 of a control server, according to an embodiment of the present disclosure.

Referring to FIG. 10, a first ship 1001 and the control server 2000, which are equipped with the integrated platform 100, are shown. The first ship 1001 may be any one of one or more ships controlled by the control server 2000.

A detailed description of the first ship 1001 equipped with the integrated platform 100 according to an embodiment of the present disclosure is as follows.

In an embodiment, the first ship 1001 includes each component within the ship and the ship-side integrated platform 100. Each component within the ship may include one or more pieces of equipment within the ship. The data storage 110 on the ship side may exchange data with each component within the ship. The data storage 110 on the ship side may include a ship data transmission/reception module capable of exchanging data with each component within the ship.

In an embodiment, the data storage 110 may include a database, and the database may include a database for onboard data and a database for onboard/offboard data. The database for onboard data may refer to a database used to store the onboard data including data received from each onboard component. The database for onboard/offboard data may refer to a database used to store signals associated with the control of a ship or data received from other ships or a control server.

In an embodiment, the data storage 110 may include a communication module. The communication module may be a module for exchanging data with the other integrated platform 100 over a network.

In an embodiment, the data storage 110 may include a module operating in conjunction with the integrated management device 120. The module operating in conjunction with the integrated management device 120 may be a module for exchanging data with the integrated management device 120 included in the integrated platform 100.

As described above, in an embodiment, the integrated management device 120 may include a ship management information generation device, an autonomous navigation controller, and a control right transfer device. The ship management information generation device may generate information for monitoring the first ship, including monitoring and diagnosis, providing weather information, and suggesting optimal routes. The autonomous navigation controller may control autonomous navigation. The control right transfer device may manage the control right of a ship.

A detailed description of the control server 2000 equipped with the integrated platform 100 according to an embodiment of the present disclosure is as follows.

In an embodiment, the data storage 110 may include a database, and the database may include a database for onboard data, a database for onboard/offboard data, and a database for external data. The database for onboard data may refer to data used to store data associated with one or more ships to be controlled by a control server. The database for onboard/offboard data may refer to a database used to store signals associated with the control of a ship. The database for external data may refer to a database used to store data exchanged with the outside of the ship management system, such as weather data, coastline data, and water depth data.

In an embodiment, the data platform may include a weather data receiving module. The weather data receiving module may be a module for receiving weather data from a weather information provider (e.g., KMA).

In an embodiment, the data storage 110 may include a weather and map data management module. The weather and map data management module may be a module that updates weather data and map data that may be distributed to one or more ships to be controlled or may be used to determine optimal routes.

In an embodiment, the data platform may include a communication module. The communication module may be a module for exchanging data with the other integrated platform 100 over a network.

In an embodiment, the data storage 110 may include a module operating in conjunction with the integrated management device 120. The module operating in conjunction with the integrated management device 120 may be a module for exchanging data with the integrated management device 120 included in the integrated platform 100.

As described above, in an embodiment, the integrated management device 120 may include a ship management information generation device, an autonomous navigation controller, and a control right transfer device. The ship management information generation device may generate information for monitoring one or more ships to be controlled. The autonomous navigation controller may control the autonomous navigation of the one or more ships to be controlled. The control right transfer device may manage the control rights of the one or more ships to be controlled.

In addition to the components described above, the integrated platform 100 of the present disclosure may further include a component necessary for operating an autonomous surface ship system.

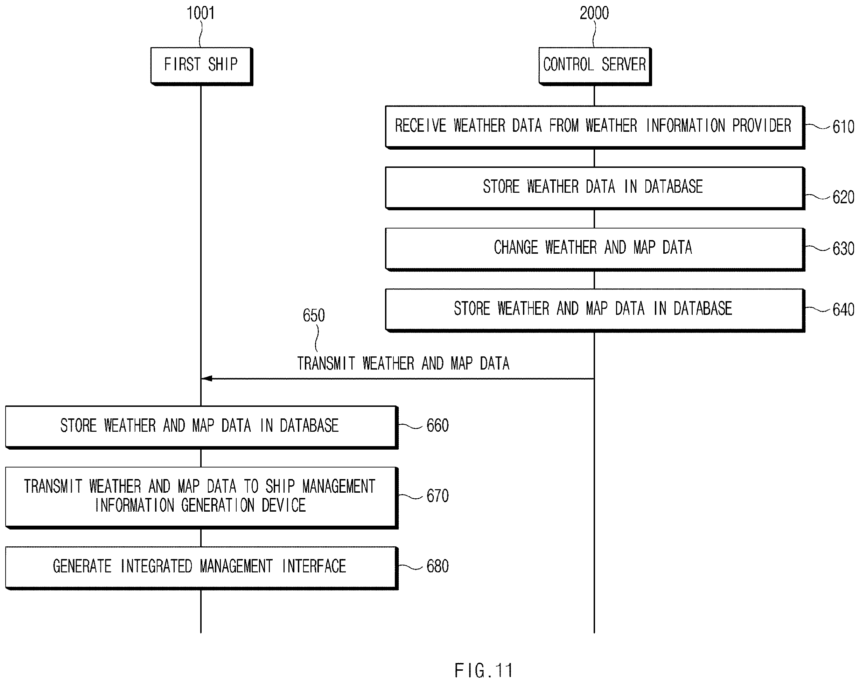

FIG. 11 is a flowchart illustrating an example of an operation between a ship and a control server, according to an embodiment of the present disclosure.

FIG. 11 is an example in which weather data is distributed from a control server to a ship.

Operations of the first ship 1001 described with reference to FIG. 11 may be understood to be performed by a first ship device, specifically, a processor included in the first ship device, and the first ship device may be equipped with the integrated platform 100. Moreover, operations of the control server 2000 described with reference to FIG. 11 may be understood to be performed by a control server device, specifically, a processor included in the control server device, and the control server device may be equipped with the integrated platform 100.

In an embodiment, in operation 610, the control server 2000 may receive weather data from a weather information provider. In an embodiment, the weather data may be received by a weather data receiving module included in the data storage 110 (a control server side). For example, the weather information provider may be KMA.

In an embodiment, in operation 620, the control server 2000 may store the weather data in a database. In an embodiment, the weather data may be stored in a database for external data included in the data storage 110 (the control server side).

In an embodiment, in operation 630, the control server 2000 may change weather and map data. In an embodiment, the weather and map data may be changed by a weather and map data management module included in the data storage 110 (the control server side).

In an embodiment, in operation 640, the control server 2000 may store the changed weather and map data in a database. In an embodiment, the changed weather and map data may be stored in a database for onboard/offboard data included in the data storage 110 (a control server side).

In an embodiment, in operation 650, the control server 2000 may transmit weather and map data to the first ship 1001. In an embodiment, the weather and map data may be transmitted by a communication module included in the data storage 110 (the control server side).

In an embodiment, in operation 660, the first ship 1001 may store the weather and map data received from the control server 2000 in the database. In an embodiment, the weather and map data may be received by a communication module included in the data storage 110 (a ship side), and the received weather and map data may be stored in the database for onboard/offboard data included in the data storage 110 (the ship side).

In an embodiment, in operation 670, the first ship 1001 may transmit the weather and map data to a ship management information generation device. In an embodiment, the weather and map data may be transmitted to the ship management information generation device by a module operating in conjunction with the integrated management device 120 included in the data storage 110 (the ship side).

In an embodiment, in operation 680, the first ship 1001 may generate an integrated management interface. In detail, the first ship 1001 may generate and update the integrated management interface based on the weather and map data. In an embodiment, the integrated management interface may be generated by the integrated management device 120 (the ship side), and the integrated management interface may be displayed via a display.

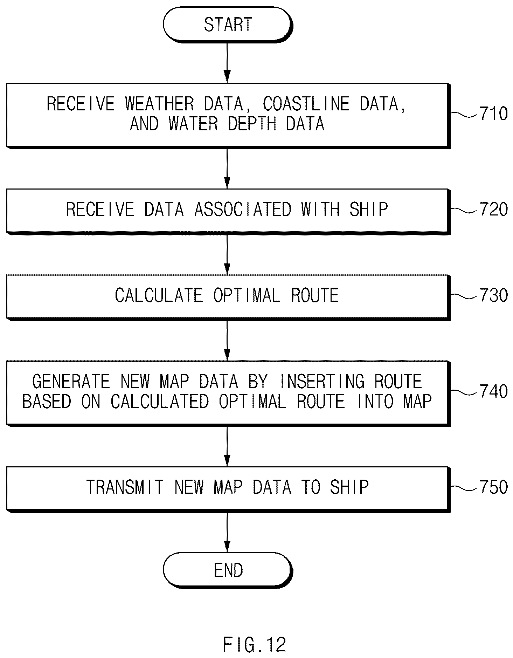

FIG. 12 is a flowchart illustrating a process for calculating an optimal route by a control server, according to an embodiment of the present disclosure.

Operations described with reference to FIG. 12 may be understood to be performed by a control server device, specifically, a processor included in the control server device, and the control server device may be equipped with the integrated platform 100.

In the ship management system of the present disclosure, an autonomous surface ship performs autonomous navigation based on an optimal route, but the optimal route that serves as the basis of the autonomous navigation is not calculated by the autonomous surface ship, but may be calculated by a control server. That is, an autonomous surface ship performs autonomous navigation based on the optimal route transmitted by the control server.

In an embodiment, in operation 710, the control server 2000 may receive weather data, coastline data, and water depth data. In an embodiment, the weather data may be received from a weather information provider, and the coastline data and the water depth data may also be received from a provider that provides related data. In another embodiment, the coastline data and the water depth data may be based on the latest data stored in a database.

In an embodiment, in operation 720, the control server 2000 may receive data associated with a ship. In an embodiment, the data associated with a ship has been collected by a ship data transmission/reception module included in the integrated platform 100 of the ship, specifically the data storage 110 of the ship. The data associated with a ship may include data associated with facilities on the ship, data generated by the ship's navigation, etc.

In an embodiment, in operation 730, the control server 2000 may calculate an optimal route. In particular, the control server 2000 may calculate an optimal route based on the data associated with the ship and weather data.

In an embodiment, in operation 740, the control server 2000 may generate new map data by inserting a route based on the calculated optimal route into a map. That is, the new map data may be created by adding changes occurring in existing map data and the calculated optimal route.

In an embodiment, in operation 750, the control server 2000 may transmit the new map data to the ship. The ship that receives the new map data may apply the changes and may perform its navigation.

FIG. 13 is a flowchart illustrating an example of controlling navigation in consideration of environmental regulations, according to an embodiment of the present disclosure.

Operations described with reference to FIG. 13 may be understood to be performed by a device of a control server side, specifically, a processor included in the control server device, and the control server device may be equipped with the integrated platform 100.

As described above, an autonomous navigation controller provided in the integrated platform 100 of the present disclosure may control the navigation of a ship based on environmental regulations.

In an embodiment, in operation 810, the control server may receive navigation data of the ship. In an embodiment, the navigation data of the ship may be collected by the integrated platform 100 of the ship, specifically a ship data transmission/reception module included in the data storage 110 of the ship, or may be generated by the integrated management device 120.

In an embodiment, in operation 820, the control server may determine whether the ship's navigation satisfies the environmental regulations.

In an embodiment, when the ship's navigation satisfies the environmental regulations, the control server may repeat receiving the ship's navigation data. That is, when the ship's operation satisfies the environmental regulations, the control server may continuously monitor the ship's navigation without performing separate control.

In an embodiment, when the ship's navigation does not satisfy the environmental regulations, in operation 830, the control server may transmit an alarm for reducing the ship's speed or changing the ship's propulsion mode. That is, the control server may request the ship to reduce its speed or to change its propulsion method. The ship that successfully receives the request may reduce its speed or may change its propulsion method to comply with the environmental regulations. For example, a ship device receiving the request may provide an alarm for reducing the ship's speed or changing the ship's propulsion method through an integrated management interface (specifically, an autonomous surface control interface), and the ship's administrator may control the ship's navigation through the integrated management interface based on the alarm.

In an embodiment, the propulsion method may include a fuel-based method, an electric battery-based method, or a hybrid method of combining fuel and electric batteries. Moreover, the propulsion method may also include a method using environmentally friendly energy such as solar energy. Because environmental impacts may vary depending on the propulsion method, whether it complies with environmental regulations may change when the ship's propulsion method changes.

In an embodiment, in operation 840, the control server may determine whether the changed ship's navigation satisfies the environmental regulations. In an embodiment, the control server may receive navigation data of the ship again from the ship to perform operation 840.

In an embodiment, when the changed ship's navigation satisfies the environmental regulations, the control server may repeat receiving the ship's navigation data. That is, when the changed ship's navigation satisfies the environmental regulations, the control server may continuously monitor the ship's navigation without performing additional control.

In an embodiment, when the changed ship's navigation does not satisfy the environmental regulations, in operation 850, the control server may provide an alarm for regenerating the ship's route and may request a review of navigation guidance. That is, because the environmental regulations are not satisfied by reducing the ship's speed or changing the ship's propulsion method, the control server may request the ship to regenerate the route and to review the navigation guidance.

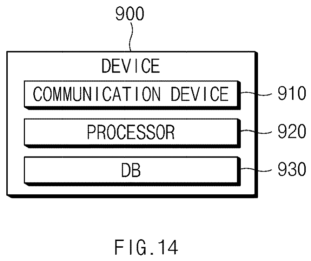

FIG. 14 is a block diagram of a device equipped with the integrated platform 100.

For example, a device 900 may be a device equipped with the integrated platform 100 described above with reference to FIGS. 1 to 13. For another example, the device 900 may be a device that controls at least some of operations of a device equipped with the integrated platform 100 described above with reference to FIGS. 1 to 13. Accordingly, descriptions overlapping the above-mentioned content with reference to FIGS. 1 to 13 will be omitted.

A device equipped with the integrated platform 100 illustrated in FIG. 14 may be a ship device equipped on a ship of a ship management system, as described above, or a control server device equipped on a control server.

Referring to FIG. 14, the device 900 equipped with the integrated platform 100 may include a communication device 910, a processor 920, and a DB 930. The device 900 equipped with the integrated platform 100 of FIG. 14 shows only components associated with an embodiment. Accordingly, it may be understood that the device 900 further includes general-purpose components in addition to the components illustrated in FIG. 14.

The communication device 910 may include one or more components that enable wired/wireless communication with an external server or external device. For example, the communication device 910 may include at least one of a short-range communication device (not shown), a mobile communication device (not shown), or a broadcast receiver (not shown).

The DB 930 may be hardware that stores various pieces of data processed within the device 900 equipped with the integrated platform 100, and may store programs for processing and controlling the processor 920.

The DB 930 may include a random access memory, such as a dynamic random access memory (DRAM) or a static random access memory (SRAM), a read-only memory (ROM), an electrically erasable programmable ROM (EEPROM), a CD-ROM, a blue ray or any other optical disk storage, a hard disk drive (HDD), a solid state drive (SSD), or a flash memory.

The processor 920 controls the overall operation of the device 900 equipped with the integrated platform 100. For example, the processor 920 may control an input unit (not shown), a display (not shown), the communication device 910, the DB 930, etc., by executing programs stored in the DB 930. The processor 920 may control the operation of the device 900 equipped with the integrated platform 100 by executing programs stored in the DB 930.

The processor 920 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or electrical units for performing other functions.

For example, the device 900 equipped with the integrated platform 100 may be an electronic device having mobility. For example, the device 900 equipped with the integrated platform 100 may be implemented as a smartphone, a tablet PC, a PC, a smart TV, a personal digital assistant (PDA), a laptop, a media player, a navigation device, a camera-equipped device, and other mobile electronic devices. Furthermore, the device 900 equipped with the integrated platform 100 may be implemented as a wearable device such as a watch, glasses, a hair band, and a ring equipped with communication functions and data processing functions.

In another embodiment, the device 900 equipped with the integrated platform 100 may be an electronic device embedded within a ship. For example, the device 900 equipped with the integrated platform 100 may be an electronic device that is inserted into the ship through tuning after the production process.

For another example, the device 900 equipped with the integrated platform 100 may be a server located outside the ship. The server may be implemented as a computer device or a plurality of computer devices that provide commands, codes, files, content, services, etc. by communicating over a network. The server may receive data necessary to determine the ship's route from devices mounted on the ship, and may determine the ship's route based on the received data.

In another embodiment, a process performed by the device 900 having the integrated platform 100 may be performed by at least some of an electronic device having mobility, an electronic device embedded within the ship, and a server located outside the ship.

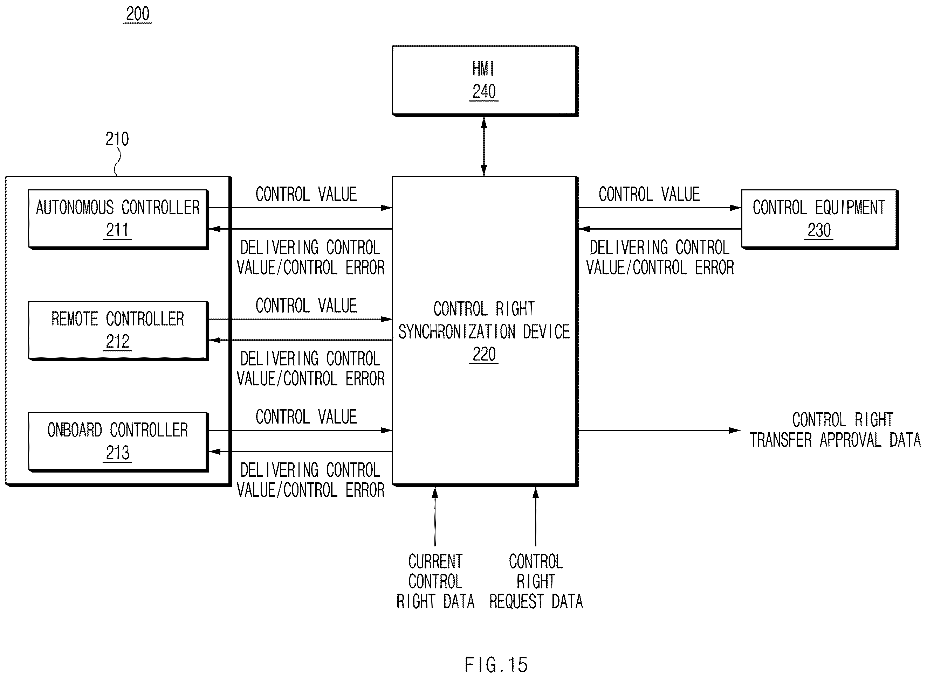

FIG. 15 is a block diagram illustrating a configuration of a control right transfer synchronization system, according to an embodiment of the present disclosure.

Referring to FIG. 15, a control right transfer synchronization system 100 according to an embodiment of the present disclosure includes a ship controller 410, a control right synchronization device 420, and a Human Machine Interface (HMI) 440.

The ship controller 410 is a configuration means for controlling the operation of a ship or autonomous surface ship, and includes an autonomous controller 411, a remote controller 412, and an onboard controller 413.

The autonomous controller 411 is a configuration means for controlling the autonomous navigation of the ship, and performs all control of the autonomous navigation of the ship. When controlling control equipment 430 included in a ship, the autonomous controller 411 outputs a control value for controlling the control equipment 430 and controls the control equipment 430 by using the output control value. The control value output from the autonomous controller 411 may be delivered to the control equipment 430 through the control right synchronization device 420 to control the control equipment 430. Of course, when the control right for the ship is received from the control right synchronization device 420, the autonomous controller 411 may control the corresponding ship. When the control right is transferred to another controller, the autonomous controller 411 may also receive a control error for adjusting the control value of the autonomous controller 411.

The remote controller 412 is a configuration means for controlling the navigation of the ship based on a control signal received from a remote location, and controls the navigation of the ship through remote control. When controlling the control equipment 430 included in a ship, the remote controller 412 outputs a control value for controlling the control equipment 430 and controls the control equipment 430 by using the output control value. The control value output from the remote controller 412 may be delivered to the control equipment 430 through the control right synchronization device 420 to control the control equipment 430. Of course, when the control right for the ship is received from the control right synchronization device 420, the remote controller 412 may control the corresponding ship. When the control right is transferred to another controller, the remote controller 412 may also receive a control error for adjusting the control value of the remote controller 412.

The onboard controller 413 is a configuration means for controlling the navigation of the ship based on a control signal received through a user input on board, and controls the navigation of the ship through onboard control. When controlling the control equipment 430 included in a ship, the onboard controller 413 outputs a control value for controlling the control equipment 430 and controls the control equipment 430 by using the output control value. The control value output from the onboard controller 413 may be delivered to the control equipment 430 through the control right synchronization device 420 to control the control equipment 430. Of course, when the control right for the ship is received from the control right synchronization device 420, the onboard controller 413 may control the corresponding ship. When the control right is transferred to another controller, the onboard controller 413 may also receive a control error for adjusting the control value of the onboard controller 413.

When a control right transfer is requested from one of controllers constituting the ship controller 410, the control right synchronization device 420 calculates the control value difference between the current controller's control value for the control equipment 430 and the control value of the transfer controller requesting the control right transfer, and adjusts the current controller's control value such that the control value difference is within the error range for the preset first time. Here, the first time may be a buffer time set to at least one portion of the control right transfer time, and this first time cannot exceed the control right transfer time.

For example, when the onboard controller 413 is controlling the ship and a control right transfer is requested through the remote controller 412, the control right synchronization device 420 may calculate the difference between the control value of the onboard controller 413 controlling the control equipment 430 and the control value received through the remote controller 412, and may perform synchronization of the control value before the ship control right is transferred from the onboard controller 413 to the remote controller 412, by adjusting the control value of the onboard controller 413 during the buffer time such that the calculated control value difference falls within the error range.

According to an embodiment, the first time (or a buffer time) for synchronizing the control value in the control right synchronization device 420 may be set differently based on at least one of the navigation area in which the ship is sailing, the classification of the ship, the classification and risk level of the control target, or the classification of the controller requesting the control right transfer.

According to an embodiment, the first time (or the buffer time) may be set differently depending on the functional classification, the classification of the controller requesting the control right transfer, and the operating condition according to the functional classification. For example, the buffer time may be a value that is initially set, and the buffer time may be set to 10 seconds by a control right synchronization device when the function classification is 'Sailing', the controller classification is 'Remote', and the operating condition according to the function classification is 'Ocean'.

According to an embodiment, the control right synchronization device 420 may also determine the buffer time by performing segmentation for each ship function and each navigation area. For example, when the ship's navigation area is the ocean, the control right synchronization device 420 may set the buffer time to be longer than a certain reference time because there are no ships nearby. When the navigation area is a narrow waterway, has a large number of ships, or is close to the coast, the control right synchronization device 420 may set the buffer time to be shorter than the reference time. For another example, the control right synchronization device 420 may differently set the buffer time depending on the risk level of each function. Because the risk level is high when a ship loads cargo and performs unloading, the control right synchronization device 420 may set the buffer time to be shorter than the reference time. Because the risk level is low when the ship performs a navigation function, the control right synchronization device 420 may set the buffer time to be longer than the reference time.

According to an embodiment, the control right synchronization device 420 may set the buffer time differently based on whether the ship is a cargo ship or an LNG ship. The maximum setting time of the buffer time may be set differently depending on the transferred control right holder.

Furthermore, the control right synchronization device 420 may also determine the buffer time by performing segmentation for each ship function and each navigation area.

According to an embodiment, even though the control value of the current controller is adjusted during the buffer time, the control value difference may be outside the error range. In this case, the control right synchronization device 420 may request a control right holder, which receives the control right, to adjust the control value such that the difference in the control value is within the error range. For example, when the current controller is the onboard controller 413 and the controller requesting a control right transfer is the remote controller 412, the control right synchronization device 420 may adjust the control value of the onboard controller 413 such that the difference between the control value of the remote controller 412 and the control value of the onboard controller 413 during the buffer time is within the error range. The control right synchronization device 420 may provide this information through the screen of the remote control right holder, by requesting the remote control right holder requesting remote control to adjust the remote control value such that the control value difference is within the error range, when the control value difference calculated at a time point at which the buffer time expires is determined to be outside the error range, and the remote control right holder may adjust the control value such that the control value difference is within the error range. For example, the difference in the control value may be adjusted to be within the error range by adjusting a wheel such that the current rudder angle matches the control value through the wheel of the remote control right holder before the remote control right holder takes over the control of a rudder angle.

According to an embodiment, even though the control right synchronization device 420 adjusts the control value of the current controller during a buffer time, the control value difference may be outside the error range. In this case, the control right synchronization device 420 may perform synchronization of control values between different controllers such that the difference in a control value is within the error range, by additionally adjusting the control value of the current controller by using a soft landing method during the remaining time excluding the buffer time during a control right transfer time such that the difference in the control value is within the error range. Here, the control right synchronization device 420 may determine the soft landing method based on the difference between the error range of the control equipment 430 and the control value calculated after the buffer time elapses. In other words, the control right synchronization device 420 may determine an error range that is not excessive according to the control value change of the control equipment 430, may provide the buffer time for adjusting the control value difference between a current control right and a transfer control right, and may automatically adjust the control value through the soft landing method after the buffer time elapses. Accordingly, the control right synchronization device 420 may perform synchronization of the control value by reducing the control value difference between the current control right and the transfer control right. For example, when the adjusted control value during the buffer time is 10 and the transfer control value is 1, the control right synchronization device 420 may control the control value through the soft landing method such that the control value is controlled linearly from 10 to 1 during the remaining time.

According to an embodiment, the control right synchronization device 420 may also perform synchronization of control values between different controllers such that the control value difference is within the error range, by setting the buffer time to '0' to adjust the control value of the current controller in the soft landing manner during the control right transfer time.

In this way, the system according to an embodiment of the present disclosure may change the change in the control value from an extreme change such as on/off to a linear change through the soft landing method, thereby stably driving the control equipment.

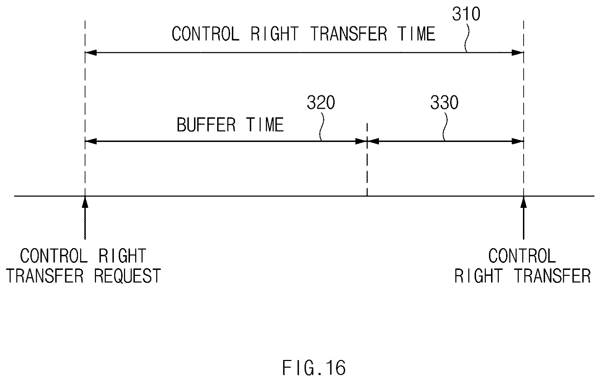

FIG. 16 is an example diagram illustrating a control right transfer process.

As illustrated in FIG. 16, when a control right transfer request is received, the control right synchronization device 420 determines a buffer time 320 of a control right transfer time 310 between the current control right and the transfer control right, and adjusts the current control value in a direction of a transfer control value such that a difference between the current control value and the transfer control value is within an error range during the buffer time 320. In this case, the control right synchronization device 420 may perform control value synchronization such that the difference between the current control value and the transfer control value is within the error range, by additionally adjusting the current control value through a soft landing method during a remaining time 330 of the control right transfer time 310 when the control value difference is outside the error range after the buffer time 320 has elapsed.

Of course, the control right synchronization device 420 is not limited or restricted to adjusting the current control value during the buffer time 320 and then further adjusting the current control value during the remaining time 330 through the soft landing method. The control right synchronization device 420 may perform synchronization such that the control value difference is within the error range, by adjusting the current control value during the control right transfer time 310 through the soft landing method. Conversely, the control right synchronization device 420 may perform synchronization between control values by adjusting the current control value during the buffer time 320 through the soft landing method and then further adjusting the current control value during the remaining time 330 through another adjustment method.

The control right synchronization device 420 may provide the HMI 440 with current control right data, control right request data, data exchanged with the ship controller, and data transmitted and received by the control of the control equipment, or may perform control right synchronization by using data set or input from the HMI 440.

The HMI 440 is an interface that provides a control value monitoring screen, a setting screen, and a control right confirmation screen.

According to an embodiment, through a control value monitoring screen, the HMI 440 may display a control value of each control right holder, may display a control value of control equipment, may display an error for changing a control right during a control right transfer, and may provide an alarm when the synchronization buffer time is exceeded. For example, the HMI 440 may monitor the current control value of the control right holder and the operation of the control equipment according to the control value.

According to an embodiment, through a setting screen, the HMI 440 may provide buffer time settings for a control right transfer, synchronization on/off for respective control equipment, control value error range settings for respective control equipment, automatic soft landing mode control on/off when a buffer time is exceeded, and landing time settings when soft landing is on.

A ship's current control right and a control right holder who requested the transfer of the control right may be identified through the control right confirmation screen.

Of course, the HMI 440 may display all types of data that may be displayed through an interface in relation to the control right transfer synchronization system of the present disclosure, and the displayable data may be determined by a business operator or individual providing the technology of the present disclosure.

In this way, the control right transfer synchronization system according to an embodiment of the present disclosure may perform synchronization of control values generated by a control right transfer request of the ship.

Moreover, the control right transfer synchronization system according to various embodiments of the present disclosure may reduce the burden on control equipment capable of being caused by sudden control right changes, and to prevent damage to personnel and cargo on board, by controlling a difference between control values due to the transfer of the control right of a ship within a certain error range.

Furthermore, the control right transfer synchronization system according to various embodiments of the present disclosure may linearly control changes in control values by controlling the changes in control values according to the transfer of control right of a ship in a soft landing method, to stably control the operation of control equipment.

Also, the control right transfer synchronization system according to an embodiment of the present disclosure may transfer the current control right of the ship to a control right holder who requested the transfer when synchronization of control values for the control right transfer is completed and the control right transfer time has elapsed. Of course, the control right transfer synchronization system according to the embodiment of the present disclosure may determine that the control right transfer synchronization has failed, when the difference between the current control value and the transfer control value is outside the error range during the control right transfer time, and may provide an alarm for "control right transfer is impossible" to a current control right holder and a control right holder that requested the transfer.

Furthermore, when there are a plurality of control right holders of the same series and a control right transfer is requested from each control right holder of the same series, the control right transfer synchronization system according to the embodiment of the present disclosure may assign a priority to each control right holder to prevent control conflict, may perform synchronization for a control right transfer based on the priority, and may perform the control right transfer through the synchronization.

Furthermore, when priorities of different control right holders are the same as each other, the control right transfer synchronization system according to the embodiment of the present disclosure may select a control suitable for the corresponding ship by predicting the control result according to each control value and selecting one of the control right holders depending on the predicted control result and the final purpose. In this case, the unselected control system may operate as a candidate system to ensure control redundancy. Here, the method of predicting the control result may be determined by the individual or business operator providing the technology of the present disclosure.

Furthermore, the control right transfer synchronization system according to the embodiment of the present disclosure may be applied even when there are two navigation systems and two docking/undocking systems. Here, each of the two navigation systems and two docking/undocking systems may correspond to control equipment.

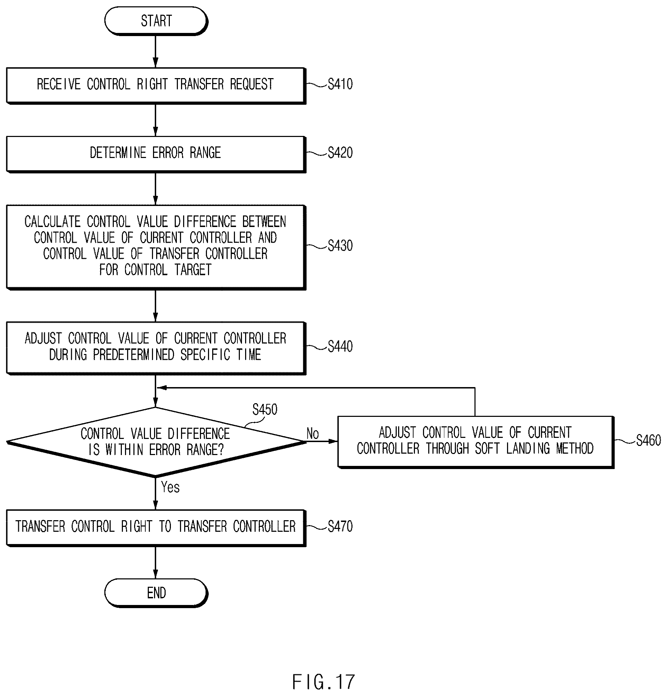

FIG. 17 is a flowchart illustrating an operation of a control right transfer synchronization method, according to another embodiment of the present disclosure. FIG. 17 shows a flowchart of operations of the system of FIG. 15.

Referring to FIG. 17, in a control right transfer synchronization method according to another embodiment of the present disclosure, when the control right synchronization device 220 of FIG. 15 receives a control right transfer request from a transfer controller, which is a target of control right transfer, in a state where the current controller controls the navigation of a ship in S410, in S420, the control right synchronization device 220 of FIG. 15 determines an error range of a control value according to a control target or control equipment.

In S430, the control right synchronization device 220 in FIG. 15 calculates the control value difference between the control value of the current controller and the control value of the transfer controller for the control target or control equipment. In S440, the control right synchronization device 220 in FIG. 15 adjusts the control value of the current controller such that the control value difference is within the error range during a predetermined specific time (a buffer time).

According to an embodiment, the buffer time may be set differently based on at least one of the navigation area in which the ship is sailing, the classification of the ship, the classification and risk level of the control target, or the classification of the controller requesting the control right transfer.

According to an embodiment, the buffer time may be set differently depending on the functional classification, the classification of the controller requesting the control right transfer, and the operating condition according to the functional classification.

In S450, the control right synchronization device 220 in FIG. 15 determines whether the control value difference is within the error range after the buffer time has elapsed when the control value of the current controller is adjusted during the buffer time. In S470, the control right synchronization device 220 in FIG. 15 or a transfer controller (not shown) transfers or switches the control right of a ship from the current controller to the transfer controller when the control value difference is determined to be within the error range and the control right transfer time has elapsed.

On the other hand, in S460, the control right synchronization device 220 in FIG. 15 may adjust the control value difference to be within the error range during the control right transfer time to transfer the control right to the transfer controller, by additionally adjusting the control value of the current controller such that the control value difference is within the error range during the remaining time after the buffer time in the control right transfer time through a soft landing method, when the control value difference is determined to be outside the error range.

Furthermore, a method according to another embodiment of the present disclosure may request a control right holder, who will receive a control right, to adjust the control value such that the difference in the control value falls within the error range when the difference in the control value falls outside the error range during the buffer time.

Even though the description is omitted in the method according to another embodiment of the present disclosure, it will be apparent to those skilled in the art that the device according to another embodiment of the present disclosure may include all of the contents described in the system of FIGS. 15 and 16, and this will be obvious to those skilled in the art.

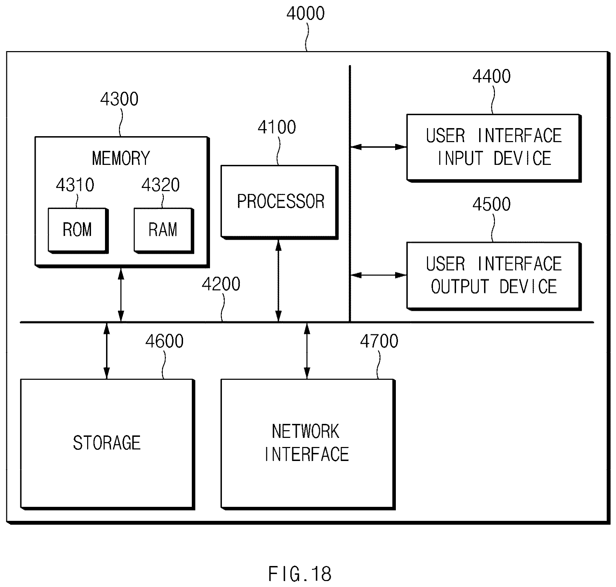

FIG. 18 shows a block diagram of a computing system for executing a control right transfer synchronization method, according to another embodiment of the present disclosure.

Referring to FIG. 18, a control right transfer synchronization method according to another embodiment of the present disclosure described above may also be implemented through a computing system. A computing system 4000 may include at least one processor 4100, a memory 4300, a user interface input device 4400, a user interface output device 4500, storage 4600, and a network interface 4700, which are connected with each other through a system bus 4200.

The processor 4100 may be a central processing unit (CPU) or a semiconductor device that processes instructions stored in the memory 4300 and/or the storage 4600. Each of the memory 4300 and the storage 4600 may include various types of volatile or nonvolatile storage media. For example, the memory 4300 may include a read only memory (ROM) 4310 and a random access memory (RAM) 4320.

Accordingly, the operations of the method or algorithm described in connection with embodiments disclosed in the specification may be directly implemented with a hardware module, a software module, or the combination of the hardware module and the software module, which is executed by the processor 4100. The software module may reside on a storage medium (i.e., the memory 4300 and/or the storage 4600) such as a random access memory (RAM), a flash memory, a read only memory (ROM), an erasable and programmable ROM (EPROM), an electrically EPROM (EEPROM), a register, a hard disk drive, a removable disc, or a compact disc-ROM (CD-ROM). The storage medium may be coupled to the processor 4100. The processor 4100 may read out information from the storage medium and may write information in the storage medium. Alternatively, the storage medium may be integrated with the processor 4100. The processor 4100 and the storage medium may be implemented with an application specific integrated circuit (ASIC). The ASIC may be provided in a user terminal. Alternatively, the processor 4100 and storage medium may be implemented with separate components in the user terminal.

Unless there is an explicit description of the order or contrary description for steps constituting the method according to an embodiment of the present disclosure, the steps may be performed in any suitable order. The present disclosure is not necessarily limited to the order in which the steps are described. The use of any examples or example terms (e.g., "etc.") in the present disclosure is merely intended to describe the present disclosure in more detail and is not intended to limit the scope of the present disclosure by the examples or exemplary terms, unless otherwise limited by the claims. Furthermore, those skilled in the art will appreciate that various modifications, combinations and variations may be made according to design conditions and factors within the scope of the appended claims or their equivalents.

The above-described embodiments may be implemented with hardware components, software components, and/or a combination of hardware components and software components. For example, the devices, methods, and elements described in the embodiments of the present disclosure may be implemented by using one or more general-use computers or special-purpose computers, such as a processor, a controller, an arithmetic logic unit (ALU), a digital signal processor, a microcomputer, a field programmable gate array (FPGA), a programmable logic unit (PLU), a microprocessor, or any device which may execute instructions and respond. A processing unit may perform an operating system (OS) or one or software applications running on the OS. Further, the processing device may access, store, manipulate, process and generate data in response to execution of software. It will be understood by those skilled in the art that although a single processing device may be illustrated for convenience of understanding, the processing device may include a plurality of processing elements and/or a plurality of types of processing elements. For example, the processing unit may include a plurality of processors or one processor and one controller. Also, the processing unit may have a different processing configuration, such as a parallel processor.

Software may include computer programs, codes, instructions or one or more combinations thereof and configure a processing unit to operate in a desired manner or independently or collectively control the processing unit. Software and/or data may be permanently or temporarily embodied in any type of machine, components, physical equipment, virtual equipment, computer storage media or units or transmitted signal waves so as to be interpreted by the processing unit or to provide instructions or data to the processing unit. Software may be dispersed throughout computer systems connected via networks and be stored or executed in a dispersion manner. Software and data may be recorded in one or more computer-readable storage media.

The methods according to the above-described embodiments may be recorded in a computer-readable medium including program instructions that are executable through various computer devices. The computer-readable medium may also include the program instructions, data files, data structures, or a combination thereof. The program instructions recorded in the media may be designed and configured especially for the example embodiments or be known and available to those skilled in computer software. The computer-readable medium may include hardware devices, which are specially configured to store and execute program instructions, such as magnetic media (e.g., a hard disk, a floppy disk, or a magnetic tape), optical recording media (e.g., CD-ROM and DVD), magneto-optical media (e.g., a floptical disk), read only memories (ROMs), random access memories (RAMs), and flash memories. Examples of computer programs include not only machine language codes created by a compiler, but also high-level language codes that are capable of being executed by a computer by using an interpreter or the like. The described hardware devices may be configured to act as one or more software modules to perform the operations of the above-described embodiments, or vice versa.

Even though the embodiments are described with reference to restricted drawings, it may be obvious to one skilled in the art that the embodiments are variously changed or modified based on the above description. For example, adequate effects may be achieved even though the foregoing processes and methods are carried out in different order than described above, and/or the aforementioned elements, such as systems, structures, devices, or circuits, are combined or coupled in different forms and modes than as described above or be substituted or switched with other components or equivalents.

The above description is merely an example of the technical idea of the present disclosure, and various modifications and modifications may be made by one skilled in the art without departing from the essential characteristic of the present disclosure. Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

## Claims

1. A ship management system comprising:
a ship controller including a first controller configured to currently control navigation of a ship and a second controller being a target of a control right transfer; and
a control right transfer device configured to transfer a control right of the ship from the first controller to the second controller based on at least one of a control right transfer request signal received from the first controller or the second controller, a priority between the first controller and the second controller, or whether an operating condition of the first controller and the second controller is satisfied.

2. The ship management system of claim 1, further comprising:
a data storage configured to store at least one of data associated with one or more facilities within the ship, data generated by navigation of the ship, or data received from an outside of the ship; and
a ship management information generation device configured to generate information for monitoring the ship based on data stored in the data storage,
wherein the control right transfer device is configured to:
determine whether an operating condition of at least one of the first controller or the second controller is satisfied, based on data received from the ship management information generation device; and
transfer the control right of the ship based on the determination result.

3. The ship management system of claim 1, wherein the ship controller includes a first remote controller configured to control navigation of the ship on land and a second remote controller configured to control the navigation of the ship at a location different from a location of the first remote controller, and
wherein the control right transfer device is configured to:
assign a priority between the first remote controller and the second remote controller based on the first remote controller, the second remote controller, and the operating condition; and
select a ship controller with a high priority among the first remote controller and the second remote controller as the second controller when receiving a control right transfer request to the remote controller.

4. The ship management system of claim 3, wherein the control right transfer device is configured to:
determine the priority between the first remote controller and the second remote controller based on a distance and a communication state between the ship and each of the first remote controller and the second remote controller.

5. The ship management system of claim 1, wherein the second controller includes:
a first autonomous controller configured to control autonomous navigation of the ship; and
a second autonomous controller configured to control the autonomous navigation of the ship, and to control at least one facility the same as the first autonomous controller, and
wherein the control right transfer device is configured to:
determine a target, to which a control right is transferred, from among the first autonomous controller and the second autonomous controller based on at least one of a control right transfer request signal received from the first autonomous controller and the second autonomous controller, a priority between the first autonomous controller and the second autonomous controller, or whether an operating condition of the first autonomous controller and the second autonomous controller is satisfied.

6. The ship management system of claim 1, further comprising:
an operating condition determination device configured to determine an operating condition corresponding to the ship controller based on a control function of the ship controller, a navigation area of the ship, and a location of the ship,
wherein the ship controller includes:
an onboard controller disposed inside the ship and configured to control the navigation of the ship;
a remote controller disposed outside the ship and configured to control the navigation of the ship; and
an autonomous navigation controller configured to control autonomous navigation of the ship, and
wherein the control right transfer device is configured to:
specify the first controller, which currently controls the ship, from among the ship controller, and the second controller that is a target of a control right transfer request; and
transfer the control right of the ship from the first controller to the second controller based on the first controller, the second controller, and the operating condition.

7. The ship management system of claim 6, wherein the remote controller includes:
a first remote controller configured to control the navigation of the ship on land; and
a second remote controller configured to control the navigation of the ship at a location different from a location of the first remote controller, and
wherein the control right transfer device is configured to:
assign a priority between the first remote controller and the second remote controller based on the first remote controller, the second remote controller, and the operating condition.

8. The ship management system of claim 7, wherein the control right transfer device is configured to:
select a remote controller with a high priority among the first remote controller and the second remote controller as the second controller when receiving a control right transfer request to the remote controller.

9. The ship management system of claim 7, wherein the control right transfer device is configured to:
determine a priority between the first remote controller and the second remote controller based on a distance and a communication state between the ship and each of the first remote controller and the second remote controller.

10. A control right transfer synchronization method, the method comprising:
receiving a control right transfer request from a second controller, which is a target of a control right transfer, in a state where a first controller is currently controlling navigation of a ship;
calculating a control value difference between a control value of the first controller and a control value of the second controller for a control target depending on the control right transfer request;
adjusting the control value of the first controller such that the control value difference is within an error range during a predetermined first time; and
transferring a control right of the ship from the first controller to the second controller when a control right transfer time expires.

11. The method of claim 10, wherein the adjusting of the control value includes:
adjusting the control value of the first controller such that the control value difference is within the error range during the first time in a predetermined control right transfer time from a time point at which the control right transfer is requested.

12. The method of claim 10, further comprising:
setting the first time based on at least one of a navigation area in which the ship is sailing, a classification of the ship, a classification and a risk level of the control target, or a classification of the second controller; or
setting the first time depending on a function classification, the classification of the second controller, and an operating condition according to the function classification.

13. The method of claim 10, wherein the calculating of the control value difference includes:
recalculating the control value difference after the control value of the first controller is adjusted during the first time, and
wherein the adjusting of the control value includes:
requesting the second controller to adjust the control value of the second controller such that the control value difference is within the error range, when the control value difference is out of the error range.

14. The method of claim 11, wherein the calculating of the control value difference includes:
recalculating the control value difference after the control value of the first controller is adjusted during the first time, and
wherein the adjusting of the control value includes:
adjusting the control value of the first controller such that the control value difference is within the error range through a soft landing method during a remaining time of the control right transfer time, when the control value difference is out of the error range.

15. The method of claim 10, further comprising:
determining the error range according to the control target when a control right transfer is requested by the second controller.
